(19) Europäisches Patentamt
European Patent Office
Office européen des brevets

(11) EP 3 319 069 B1

(12) EUROPEAN PATENT SPECIFICATION

(45) Date of publication and mention
of the grant of the patent:
01.05.2019 Bulletin 2019/18

(51) Int Cl.:
G09C 5/00 (2006.01)          G06F 21/36 (2013.01)
H04L 9/32 (2006.01)          H04L 29/06 (2006.01)

(21) Application number: 17172856.1

(22) Date of filing: 24.05.2017

(54) **METHOD FOR AUTHENTICATING A USER BY MEANS OF A NON-SECURE TERMINAL**

VERFAHREN ZUR AUTHENTIFIZIERUNG EINES BENUTZERS MITHILFE EINES NICHTSICHEREN ENDGERÄTS

PROCÉDÉ D'AUTHENTIFICATION D'UN UTILISATEUR AU MOYEN D'UN TERMINAL NON SÉCURISÉ

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 02.11.2016  EP 16196947
02.11.2016  EP 16196945
02.11.2016  EP 16196950
02.11.2016  EP 16196957

(43) Date of publication of application:
09.05.2018 Bulletin 2018/19

(73) Proprietor: Skeyecode
75008 Paris (FR)

(72) Inventors:
• PITEL, Guillaume
94240 L'Hay les Roses (FR)
• LELEU, Jean-Luc
75013 Paris (FR)

(74) Representative: de Roquemaurel, Bruno et al
Omnipat
24 place des Martyrs de la Résistance
13100 Aix en Provence (FR)

(56) References cited:
EP-A1- 2 525 561          WO-A2-2006/128876
US-A1- 2013 301 830          US-A1- 2016 085 974
US-B2- 9 483 653

**Description**

TECHNICAL FIELD

The present invention relates to a method and device for securely authenticating a user from a non-secure terminal, and for executing a secure transaction involving such a non-secure terminal and a remote server, based on such a user authentication.

BACKGROUND

It would be desirable to execute transactions, for instance e-commerce transactions or fund transfer, initiated from mobile terminals such as smartphones, personal computers, digital tablets, or the like, or any other connected device including devices belonging to the Internet of Things (IoT). However, this raises security problems, notably because "malicious software" or "malware" may be executed by a processor (CPU) of the terminal. The malware may be able to access to all or a part of the memories accessible by the main processor, and thus may be maliciously configured to spy on any transactions executed by the terminal and to recover any secret data manipulated during these transactions for transmission over the network.

To ensure the security of such transactions, it has already been proposed to entrust cryptographic computations to a dedicated secure element, such as the processor of a UICC ("Universal Integrated Circuit Card") card, e.g. a SIM (subscriber identification module) card with which cell phones are generally equipped. In order to be able to execute one or more payment applications, the secure processor must be able to store as many secret cryptographic keys as there are payment applications. However, loading an application into the memory of a secure processor is a complex operation that needs to be highly secure. Specifically, it involves external parties such as Trusted Service Managers. Since SIM cards are issued by cell phone operators, the latter may refuse to have such applications installed in the card. Furthermore, in the event of theft, or during maintenance of the telephone, the processor of the SIM card may be hacked by a hacker seeking to discover the secret keys stored in its memory.

The patent application WO2012/107698 filed by the Applicant discloses a method using a graphic processor of the terminal as a secure element to perform transaction. This method comprises steps of establishing a secure communication link between the graphic processor of the terminal and an authentication server, and displaying a virtual keypad with keys arranged in a random order. The image of the keypad is displayed using visual cryptography, by successively displaying complementary frames in which the labels of the keys are not intelligible, the complementary frames being combined into an intelligible image by the visual system of the user thanks to the retinal remanence thereof. In this way, even if a malicious program running on the main processor of the terminal is able to access the positions of the keys touched by the user during input of a secret code, it cannot, by taking a succession of screenshots, determine which labels correspond to the touched keys.

However, this method requires important calculation resources that are not available in all portable devices such as all of the existing smartphones on the market.

To secure transactions performed using a terminal connected to a web site, it has been proposed to use a single-use secret code which is transmitted to the user each time a transaction needs to be validated. According to a first solution the single-use secret code is transmitted to the user via a distinct communication channel, e.g. via a phone link or SMS (Short Message Service), the user being required to input the received secret code on the terminal to validate the transaction. Another known solution provides an additional hardware device to each of the users, this device generating the single-use secret code after an authentication of the user by means of credentials such as a password or biometric data. These solutions are burdensome for the users who do not always have nearby a phone or mobile or wireless network coverage, or this hardware device, when they are required to validate a transaction. The solution requiring an additional hardware device is costly for the banking organizations. In addition, the solution using a secret code transmitted by SMS obviously does not provide sufficient high security level since it has already been subjected to successful attacks.

Therefore, it may be desirable to propose a method for authenticating a user by means of a non-secure user terminal. It may also be desirable to protect secret data input by users and transaction data transiting through such a non-secure terminal. Further, it may desirable to make the proposed method compatible with all existing terminals, even with terminals of low computation power.

SUMMARY

A method is disclosed for authenticating a user from a user terminal, the method comprising: receiving by the user terminal, from a secure processor, a software component protected against tampering and reverse-engineering and configured to generate an image frame comprising random pixels having a probability lower than 100% to be visible in the image frame; executing the software component by the user terminal a plurality of times to generate a plurality of image frames; displaying the plurality of image frames at a frame display rate, the image frames including information which is machine unintelligible as being formed of the random pixels, the frame display rate being such that the information becomes intelligible to a user; acquiring a response from the user in relation with the information; and transmitting by the user terminal the response to the secure processor, the user being authenticated when the response corresponds to the information.

According to an embodiment, the software component is configured to generate a plurality of frame image parts each comprising the random pixels, the method further comprising inserting each generated image frame part into an image frame background to generate the plurality of image frames.

According to an embodiment, the software component is configured to generate encrypted frame image parts comprising the random pixels, the method further comprising: decrypting, by the user terminal, each generated encrypted image frame part, by applying to each pixel of the encrypted image frame part an XOR operation with a corresponding pixel of a decrypting mask; each decrypted image frame part being inserted into an image frame background to generate one of the plurality of image frames.

According to an embodiment, the decrypting mask is configured to produce a message in the displayed image frames, when decrypting one of the generated encrypted image frame parts.

According to an embodiment, the machine unintelligible information in the displayed image frames comprises segments arranged to form symbols, or numeric or alphanumeric characters, at least a part of the segments being formed with the random pixels.

According to an embodiment, the segments are arranged to form labels of keys of a keypad having a random key layout, the response from the user comprising positions of keys of the keypad successively selected by the user.

According to an embodiment, the response from the user comprises positions of keys of the keypad corresponding with a validation code displayed with segments formed with the random pixels.

According to an embodiment, the software component is configured to set a probability of the random pixels to be visible in the displayed image frames, the probability being selected in a set of visible probability values.

According to an embodiment, the software component is configured to provide the random pixels with a probability set to a value equal to 50% or comprised between 12.5% and 87.5%, to be visible in the displayed image frames.

According to an embodiment, the software component is encoded as a garbled circuit comprising circuit inputs, circuit outputs, logic gates and wires, each logic gate having two inputs and one output, each wire having a first end connected to one of the circuit inputs or to one of the logic gate outputs and a second end connected to one of the logic gate inputs or to one of the circuit outputs, the garbled circuit being generated by randomly generating a valid data representing each binary state of each of the wires, and by computing for one logic gate of the garbled circuit, truth table values as a function of each valid data of each input of the logic gate, each valid data of the output of the logic gate and a logic operation performed by the logic gate.

According to an embodiment, the software component comprises a pixel set generation circuit for a set of random pixels to generate, each generation circuit comprising a first logic gate and a set of second logic gates, the first logic gate combining a first input data to a randomly selected second input data, and providing an output data to a first input of each of the second logic gates, a second input of each of the second logic gates receiving a third input data, each of the outputs of the second logic gates providing a pixel value of the set of random pixels.

According to an embodiment, the software component is executed within a web browser executed by the user terminal

Embodiments may also relate to a user terminal configured to: receive from a secure processor a software component protected against tampering and reverse-engineering and configured to generate an image frame comprising random pixels having a probability lower than 100% to be visible in the image frame; execute the software component a plurality of times to generate a plurality of image frames; display the plurality of image frames at a frame display rate, the image frames including information which is machine unintelligible as being formed of the random pixels, the frame display rate being such that the information becomes intelligible to a user; acquire a response from the user in relation with the displayed information; and transmit the response to the secure processor, the user being authenticated when the response corresponds to the information and to a secret data shared by the user and the secure processor.

According to an embodiment, the terminal is configured to execute the operations performed by a user terminal in the previously defined method.

According to an embodiment, the secure processor is a secure element connected to a main processor of the terminal.

According to an embodiment, the secure processor belongs to a remote server linked to the terminal through a data transmission network.

Embodiments may also relate to a secure element configured to execute the operations performed by a secure processor in the previously defined method, the secure element being connected to a main processor of a terminal.

Embodiments may also relate to a server configured to execute the operations performed by a secure processor in the previously defined method, the server being linked to the terminal through a data transmission network.

Embodiments may also relate to a computer program product loadable into a computer memory and comprising code portions which, when carried out by a computer, configure the computer to carry out the operations performed by the previously defined user terminal.

BRIEF DESCRIPTION OF THE DRAWINGS

The method and/or device may be better understood with reference to the following drawings and description. Non-limiting and non-exhaustive descriptions are described with the following drawings.

Figure 1 is a block diagram of user terminals performing transactions with remote servers;

Figure 2 is a block diagram of a user terminal;

Figure 3 is a sequential diagram of initialization steps performed by a user terminal, an authentication server and an application server, according to an embodiment;

Figure 4 is a sequential diagram showing authentication steps, according to an embodiment;

Figure 5 is a block diagram of a database managed by the authentication server, according to an embodiment;

Figures 6 and 7 are sequential diagrams showing authentication steps, according to other embodiments;

Figures 8A and 8B represent respectively an image frame displayed by the user terminal, and a corresponding resultant image which can be observed by a user of the user terminal, according to an embodiment;

Figure 9 represents two layers of a part of an image frame which are displayed superimposed by the user terminal, a corresponding part of a resultant image frame which is displayed by the user terminal, and a corresponding part of a resultant image which can be observed by a user of the user terminal, according to an embodiment;

Figure 10 is a block diagram of an application program executed by the user terminal, according to an embodiment;

Figure 11 is a block diagram of a circuit implemented by software in the user terminal, according to an embodiment;

Figure 12 is a block diagram of a database describing the circuit implemented in the user terminal, according to an embodiment;

Figure 13 is a block diagram illustrating a processing performed by the application program for displaying the image frame of Figure 8A, according to an embodiment;

Figure 14 is a block diagram of a part of the circuit of Figure 11, according to another embodiment;

Figure 15 is a sequential diagram showing authentication steps, according to another embodiment.

DETAILED DESCRIPTION

In the figures, like referenced signs may refer to like parts throughout the different figures unless otherwise specified.

In the following, the term "secure" is employed according to its plain meaning to those of ordinary skill in the art and encompasses, in different embodiments, security arising from techniques such as encryption, or other types of software or hardware control used to isolate information from the public or to protect it against unauthorized access or operation. The expressions "secure communication" and "secure communication link" refer to communications that are encrypted using public/private key pairs, or symmetrical key encryption with keys shared between communicating points. "Secured communications" can also involve virtual private networks, and other methods and techniques used to establish authenticated and encrypted communications between the communicating points.

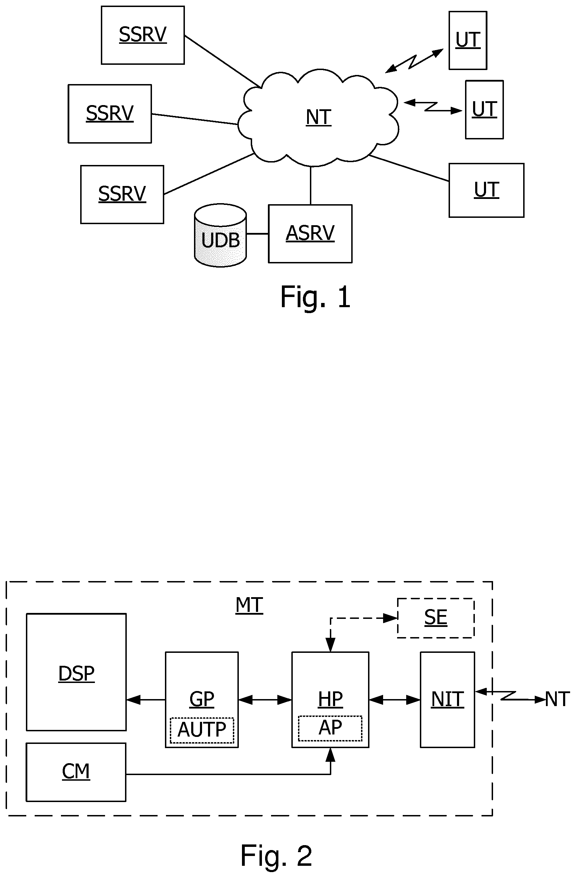

Figure 1 represents user terminals UT that can perform transactions with remote service provider servers or application servers SSRV through communication networks NT. In the following, the term "user terminal" shall be synonymous and refer to any device that can communicate with one or more remote servers such as application servers and service provider servers. Thus, a user terminal can be for instance a mobile phone, a smartphone, a payment terminal, a personal computer and a digital tablet equipped with communication circuits. The communications networks may include IP (Internet Protocol) networks, such as Internet, mobile or cellular networks, wireless networks, and any kind of network that can be used to establish a communication link between a user terminal and a remote server.

According to an embodiment, an authentication server ASRV is configured to implement a method for authenticating a user during transactions involving an application or service provider server SSRV and a user terminal UT, based on a two-factor authentication scheme.

Figure 2 represents a conventional terminal UT, comprising communication circuits NIT for communicating with a remote server such as the server ASRV, through a transmission network such as the network NT. The terminal UT can be a cellular phone, a smartphone or a PDA (Personal Digital Assistant) or any other device such as a digital tablet or a personal computer including communication circuits to be connected to a network such as Internet network. The user terminal UT further comprises a main processor HP (also called "Central Processing Unit" - CPU) connected to the communication circuits NIT, a display screen DSP, a graphic processor GP connected to the processor HP and controlling the display screen DSP, and a control device CM connected to the processor HP. The control device can include a keyboard or keypad, or a touch-sensitive surface, e.g. transparent and disposed on the display screen DSP. The control device CM can further include a pointing device such as a mouse, a pencil or a pen.

The terminal UT can further comprise a secure element SE, such as a secure processor that can be standalone or embedded into a smartcard UICC. The secure processor SE can be for example a SIM ("Subscriber Identity Module") card, providing an access to a cellular network. The secure processor SE can include an NFC ("Near Field Communication") circuit to communicate with a contactless reader. The NFC circuit can be embedded into a SIM card (SIM-NFC) or UICC, or in a SoC ("System on Chip") circuit, or in an external memory card, for example an "SD card". The circuits NIT can include a mobile telecommunication circuit giving access to a mobile cellular network and/or to the Internet network, through the cellular network, and/or a wireless communication circuit (Wi-Fi, Bluetooth™, ...), and/or any other wired or wireless connection circuit that can be linked to a data transmission network such as Internet.

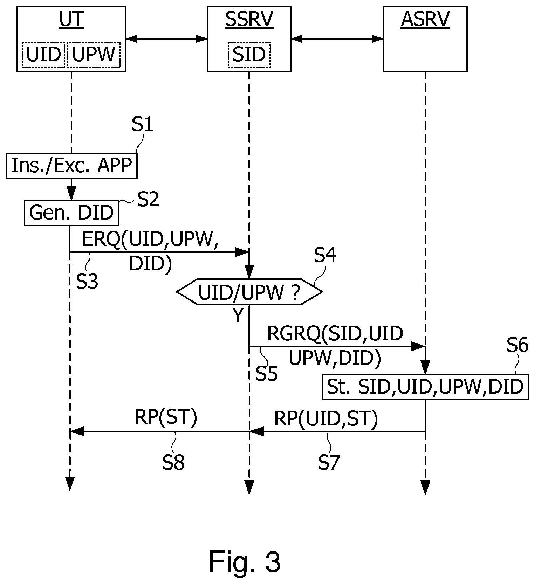

Figure 3 represents registration steps S1 to S8 provided for registering a user terminal UT to be used for authenticating a user to validate a transaction or to access a service. Steps S1 to S8 are successively performed and can be executed only once. At step S1, the user downloads and installs and/or launches execution of an application APP dedicated to or involving user authentication in a user terminal UT to be used for authentication. At step S2, the application APP generates a unique device identifier DID of the terminal UT. Steps S2 to S7 are performed at a first execution of the application APP by the terminal UT. At step S3, the application APP connects the user terminal UT to the service provider or application server SSRV, e.g. to a web site of the service provider, and transmits a terminal enrollment request ERQ to the server SSRV. The terminal enrollment request comprises user credentials, such as a user identifier UID and a corresponding password UPW, and the device identifier DID. At step S4, the server SSRV receives the enrollment request ERQ and checks the received user credential UID, UPW. If the received user credentials correspond to a valid registered user, the server SSRV sends at step S5 to the authentication server ASRV, a registration request RGRQ containing the user credentials UID, UPW, the device identifier DID and a service identifier SID related to the service provider server SSRV. The communication link between the servers SSRV and ASRV is secured in a suitable way (e.g. using encryption means), such that a hacker cannot retrieve the transmitted data. The following steps S6, S7 performed by the server ASRV are executed by a secure processor of the server ASRV or within a secure domain thereof. The links between the terminal UT and the server SSRV and between the terminal UT and the server ASRV are not required to be secure links.

At step S6, the authentication server ASRV receives the registration request RGRQ and stores the received data, i.e. the user credentials UID, UPW the identifier DID of the user terminal and the service identifier SID in a user database UDB. At step S7, the server ASRV transmits a message RP in response to the request RGRQ to the service provider server SSRV. The message RP contains the user identifier UID and a status of the registration. The message RP can be retransmitted by the server SSRV to the user terminal UT.

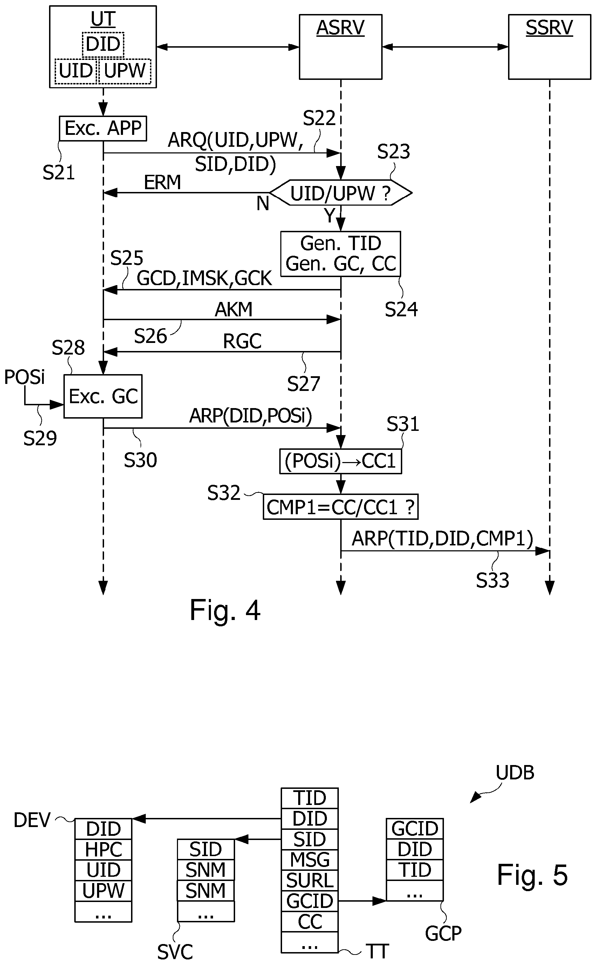

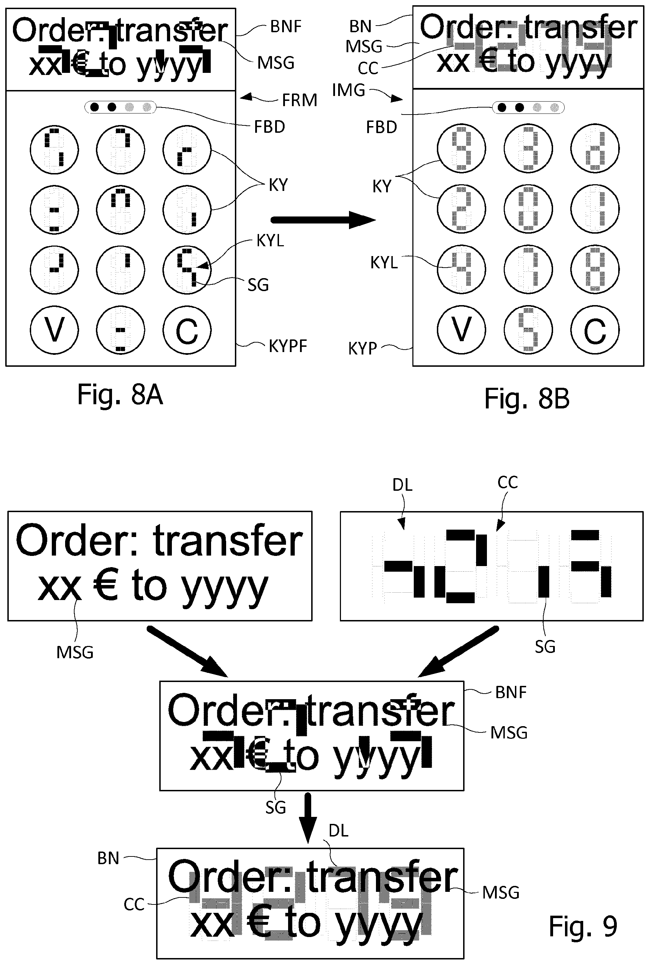

Figure 4 represents authentication steps S21 to S33, which are successively performed to authenticate the user during a transaction conducted by the application APP or for executing an operation of this application, requiring the user to be authenticated. The authentication of the user requires that the user terminal UT is registered by the authentication server ASRV, by executing steps S1 to S6 of Figure 3, for example. At step S21, the user terminal UT launches execution of the application APP. At step S22, the application APP needs to authenticate the user and transmits an authentication request ARQ to the authentication server ASRV. The authentication request ARQ contains an identifier SID of the service, the credentials UID, UPW of the user involved in the transaction, the service provider identifier SID for which the authentication should be performed, the device identifier DID of the user terminal UT, and possibly a message (MSG in Figs. 8A, 8B and 9) to be displayed to the user and presenting for example information related to the transaction to be validated by the user, and an address SURL of a service provider server where a result of the authentication is to be transmitted by the authentication server ASRV.

At step S23, the authentication server ASRV receives the request ARQ, and checks the consistency of the data transmitted in the authentication request ARQ. To this end, the authentication server ASRV may use the data stored in the database UDB or send an authentication request message to the server SSRV, containing the user credentials UID, UPW, the server SSRV verifying the consistency of the user credentials and providing a response to the server ASRV containing a result of the verification. If the transmitted data are not consistent, the server ASRV transmits an error message ERM to the user terminal UT and the execution of the application APP ends. If the data in the received request ARQ are consistent, the authentication server ASRV performs step S24 where it generates a transaction validation code CC, preferably of single-use, and a distinct dedicated software component GC specific to the user terminal UT corresponding to the device identifier DID. The software component GC is designed to display the validation code CC, and it is specific to this code. The authentication server ASRV can also generate a unique transaction identifier TID which is stored in the database UDB. At step S25, the server ASRV sends to the terminal UT structure and content data GCD defining the software component GC and including input data of the software component in an encrypted form, a final mask IMSK to be applied to image frame parts generated by the software component circuit, and a cryptographic data GCK to be used to execute the software component. At step S26, the server ASRV sends an acknowledge message ACK to the server SSRV, this message containing the user identifier UID and the transaction identifier TID. At step S27, the application APP executed by the terminal UT receives the data GCD, IMSK, GCK related to the software component GC and transmitted at step S25, and sends an acknowledge message AKM to the server ASRV. If the application APP is not currently running on the terminal UT, the reception of the data related to the software component may trigger the execution of the application APP. At step S26, the user terminal UT may transmit an acknowledge message AKM to the server ASRV in response to the data received at step S25. At step S27, the server ASRV may send to the terminal UT a request RGC to execute the software component GC. At step S28, the reception of the notification RGC triggers the execution by the application APP of the software component GC which displays image frames showing for example a keypad having keys, the message MSG and the single-use transaction validation code CC, for example of two or more digits. The application APP executed by the terminal UT may also trigger the execution of the software component GC when it is received at step S25.

According to an embodiment, the keys of the keypad displayed by the software component are arranged in a randomly selected layout in the displayed frames, and only parts of labels of the keys and of the validation code are displayed in each frame, such that the key labels and the validation code are intelligible to the human visual system thanks to the persistence of the latter, but not in screenshots of the display screen DSP. According to an embodiment, the validation code CC is superimposed on the message MSG (or vice-versa), such that the message cannot be changed without disturbing the validation display.

At step S29, the user of the terminal UT inputs the displayed validation code CC. In the example of a smartphone, the user uses the displayed keypad, and touches corresponding positions POSi of the keys of the displayed keypad. At step S30, the application APP transmits the sequence of positions POSi selected by the user and the device identifier DID to the server ASRV. At step S31, the server ASRV determines the code CC1 corresponding to the positions POSi typed by the user. Since the keypad used to input the positions POSi was displayed by the software component GC which was generated by the server ASRV, the server ASRV knows the displayed keypad layout and thus can determine the keys labels corresponding to the positions POSi, and consequently the value of the validation code CC1 typed by the user. At step S32, the server ASRV compares the entered validation code CC1 with the validation code CC generated at step S24 and which can be stored in the database UDB in association with the device identifier DID. At step S33, the server ASRV transmits to the service provider server SSRV using an address SURL of the server SSRV, an authentication response ARP containing the user identifier UID, the result of the comparison performed at step S32, and possibly, the transaction identifier TID. The transmission response ARP may be also transmitted to the application APP executed by the user terminal UT. In this way, the user corresponding to the identifier UID is authenticated and the transaction TID may be validated only when the typed validation code CC1 match the validation code CC corresponding to the software component GC sent by the server ASRV to the user terminal UT at step S24.

In this way, only the positions POSi typed by the user are transmitted from the user terminal UT to the server ASRV. Therefore, a malware installed in the terminal UT or a man-in-the-middle attack between the server ASRV and the user terminal UT cannot discover the typed code CC1 without executing the software component GC. If this happens, the hacker performing the attack must send a message ARP to the server ASRV (as in step S30). Thus the server ASRV can receive two messages ARP for a same transaction or from the same user terminal UT, one from the authenticated user and one from the hacker, and can invalidate the transaction.

According to an embodiment, the message ARP is transmitted by the user to the server ASRV (step S30) by another transmission channel.

Figure 5 represents different tables DEV, SVC, TT, GCP of the database UDB. The table DEV contains one record for each registered user device or terminal UT, each record comprising a device identifier DID, and the corresponding user credentials UID, UPW. The table SVC contains one record for each service provider registered with the authentication server ASRV, each record of the table SVC comprising a service identifier SID and a service name. The table TT contains one record for each current transaction, each record comprising a transaction identifier TID, a device identifier DID, a service identifier SID, the message MSG to be displayed by the software component GC triggered by the application APP and executed by the terminal having the identifier DID, the address SURL provided at step S22, an identifier GCID identifying the software component generated for the transaction TID, and a single-use transaction validation code CC. The table GCP contains one record for each software component generated by the server ASRV, each record comprising an identifier GCID identifying the software component, a device identifier DID of the device UT for which the software component GC was generated at step S24, and the identifier TID of the transaction for which the software component GC was generated. Since the software components are dedicated to one transaction and consequently generated and executed for only one user authentication, the records corresponding to an already ended transaction can be deleted from the table GCP, but they may be kept for statistical purposes or to ensure the unicity of each transaction.

According to an embodiment, the operations performed by the authentication server ASRV (in Figures 3 and 4) can be implemented in the service provider server SSRV. In such a case, the server SSRV does not need to be identified in the steps S23 and S33, and in the data base UDB.

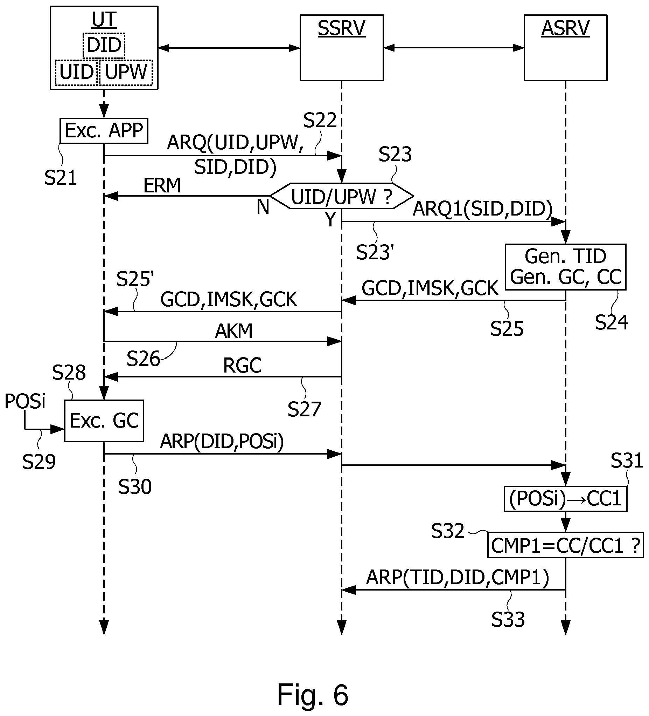

According to another embodiment, the user terminal communicates only with the service provider server SSRV. Therefore, the user credential check (step S23) is performed by the service provider server SSRV, and thus the authentication server ASRV does not have to know the user password UPW to be used to access the service provided by the server SSRV. In this embodiment illustrated in Figure 6, step S5 is modified to remove the user password UPW from the registration message RGRQ. Figure 6 represents the authentication steps S21 to S33, which are successively performed to authenticate the user during a transaction. At step 22, the authentication request is transmitted from the user terminal UT to the service provider server SSRV. The user authentication step S23 on the basis of the user credentials UID, UPW is performed by the server SSRV. In a following step S23', the server SSRV transmits an authentication request ARQ1 to the authentication server ASRV. The authentication request ARQ1 comprises only the identifier SID of the service provider and the user device identifier DID. After receiving the authentication request ARQ1, the server ASRV executes step S24 as in the embodiment of Figure 4. In step S25, the server ASRV transmits the structure and content data GCD defining the software component GC and including input data of the software component in an encrypted form, the final mask IMSK to be applied to image frame parts generated by the software component circuit, and the cryptographic data GCK to be used to execute the software component. These data can be transmitted directly to the user terminal UT or by means of the server SSRV which retransmits them to the terminal UT in step S25'. Then the steps S26 and S27 can be performed between the user terminal UT and the server ASRV or as represented in Figure 6, between the user terminal UT and the server SSRV.

Then the terminal UT performs the steps S28 to S30. The authentication response ARP sent in step S30 by the terminal UT can be transmitted directly to the server ASRV or as represented in Figure 6, received first by the server SSRV which retransmits it to the server ASRV. Upon reception of the authentication response ARP, the server ASRV performs the steps S31 to S33 as illustrated in Figure 4. An authentication report can be transmitted to the user terminal UT either by the server ASRV or by the server SSRV.

Instead of being performed by the application APP, the steps S22, S26, S28 and S30 can be performed within or by a web browser installed in the terminal UT, the steps S26, S28 and S30 being performed by a script executed by the web browser, such as a script written in "JavaScript", and transmitted in a web page by the server ASRV.

An embodiment can be adapted to prevent a phishing attack by which a hacker steals a user account with a service provider such as a banking or payment account or an email account. According to this attack, the hacker connects to the service provider using a true user identifier and repeatedly activates a link to regenerate the password corresponding to the user identifier. When such a link is activated, the service provider transmits to a registered email address or a registered phone number corresponding to the user identifier a message containing a single-use secret number to be introduced in a web page of a web site of the service provider. Then the hacker transmits to the user a fake message indicating that his account is subjected to attacks and requesting the user to activate a link to be clicked on provided in the message. Since the user received several messages providing a secret number to enable the generation of a new password, the user is aware of the attack announced by the hacker and thus he does not suspect that the message from the hacker is a trap. When the user activates the link, he receives a fake web page looking like a true web page from the service provider web site and requesting the secret code provided in the last message received by the user from the service provider. If the user types the secret code in the fake web page, the hacker gets the secret code and can use it to generate a new password for the user account from the web site of the service provider. From this time, the hacker gets access to the user account on the server of the service provider instead of the user.

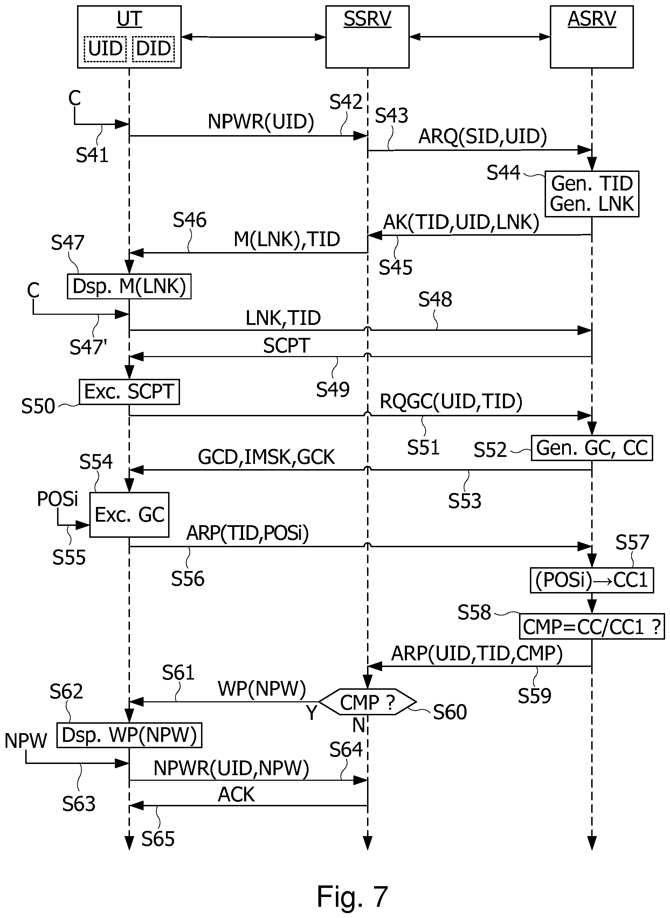

Figure 7 represents an embodiment that can prevent such a phishing attack. The embodiment of Figure 7 comprises steps S41 to S65 performed successively by the user terminal UT, the service provider server SSRV and the authentication server ASRV together. In step S41, a web browser installed in the user terminal displays a web page from a web site of the service provider. The displayed web page contains a link enabling the user to generate a new password for accessing a user account with the service provider. When the user activates this link, a message NPWR requesting a new password is transmitted to the server SSRV in step S42. The message NPWR contains a user identifier UID and a device identifier of the terminal UT used by the user in steps S41, S42. When it receives the message NPWR in step S43, the server SSRV transmits an authentication request ARQ to the authentication server ASRV. The request ARQ contains an identifier SID of the service provider, an identifier UID of the user (e.g. an email address of the user). In step S44, the server ARSV receives the request ARQ and generates a transaction identifier TID and a link LNK to request an authentication. The transaction identifier TID identifies the current user authentication transaction. In step S45, an acknowledge message AK containing the transaction identifier TID, the user identifier UID and the link LNK is transmitted by the server ASRV to the server SSRV. In step S46, the server SSRV transmits to the user terminal UT a message M(LNK) containing the link LNK and the transaction identifier TID, using an email address of the user that can be transmitted by the user terminal UT at step S42.

At step S47, the terminal UT (an email application or a web browser installed in the terminal) displays the received message M(LNK). Then the user activates the link LNK in the displayed message in step S47'. In step S48, the activation of the link LNK triggers the transmission by the user terminal to the server ASRV of a message containing the transaction identifier TID. At the reception of such a message at step S49, the server ASRV transmits to the user terminal a script SCPT for example written in the language "JavaScript" to be executed by a web browser installed in the terminal UT. The steps S50, S51, S54, S56, S62 and S64 are performed within or by a web browser installed in the terminal (or by the script SCPT executed in the web browser). In step S50, the web browser of the terminal UT launches execution of the received script SCPT. In step S51, the terminal UT controlled by the script SCPT sends a request RQGC for a dedicated software component GC specific to the user terminal UT. The request RQGC contains the identifiers TID and UID, and information about the user terminal such as a type (Personal computer / smartphone / digital tablet / ...) of the user terminal UT. In step S52, the authentication server ASRV receives the request RQGC and generates au authentication code CC, preferably of single-use, and a distinct dedicated software component GC specific to the user terminal UT and the application requesting the software component (dedicated application or web browser), as in previously described step S24. At step S53, the server ASRV sends to the terminal UT structure and content data GCD defining the software component GC and including input data of the software component in an encrypted form, a final mask IMSK to be applied to image frame parts generated by the software component circuit, and a cryptographic data GCK to be used to execute the software component.

At step S54, the script SCPT executed by the web browser in the terminal UT receives the data GCD, IMSK, GCK related to the software component GC and transmitted in step S53. The terminal UT may send an acknowledge message to the server ASRV in response to the data received at step S53. Then the script SCPT executes the software component GC which displays image frames showing for example a keypad having keys, and the single-use authentication code CC, for example of two or more digits. At step S55, the user of the terminal UT inputs the displayed authentication code CC. In step S56, the script SCPT executed by the terminal UT transmits the sequence of positions POSi selected by the user and the transaction identifier TID to the server ASRV. In step S57, the server ASRV determines the code CC1 corresponding to the positions POSi typed by the user. Since the keypad used to input the positions POSi was displayed by the software component GC which was generated by the server ASRV, the server ASRV knows the displayed keypad layout and thus can determine the keys labels corresponding to the positions POSi, and consequently the value of the authentication code CC1 typed by the user. In step S58, the server ASRV compares the entered code CC1 with the authentication code CC generated at step S52. At step S59, the server ASRV transmits to the service provider server SSRV, an authentication response ARP containing the user and transaction identifiers UID, TID, and the result CMP of the comparison performed at step S58. In step S60, if the typed code CC1 matches the authentication code CC, the server SSRV transmits in step S61, to the user terminal UT a web page WP(NPW) enabling the user to enter a new password for his account with the service provider. The user terminal to which the web page WP(NPW) is to be transmitted is known by the server SSRV from the step S42 at which it receives the new password request. In step S62, the web browser of the user terminal UT displays the received web page WP(NPW). In step S63, the user introduces a new password NPW in the displayed web page WP(NPW). In step S64, the user terminal UT transmits the new password NPW to the server SSRV, together with the user identifier UID in a password change request NPWR. In step S65, the server ASRV may send an acknowledge message ACK to the terminal UT.

In this way, steps S43 to S61 require the authentication code CC to be read on the terminal UT and introduced in the latter using the keypad which is displayed with the authentication code CC. Therefore, a hacker is prevented to get and use the authentication code, to be authenticated instead of the true user. In addition, a human could be required to perform these operations, which prevents automatic attacks directed to a large number of user accounts.

Here again, the operations performed by the authentication server ASRV can be implemented in the service provider server SSRV.

The communications between the user terminal UT and the server ASRV may be secured, e.g. using the SSL protocol, at least from step S49 to step S56, thereby preventing a man-in-the-middle attack.

Such a man-in-the-middle attack can also be prevented using an additional secret code previously provided to the user, for instance, by another communication channel and/or by another device, or during a user enrollment procedure. This additional secret code can be required for authenticating the user in steps S54 to S58, and introduced at step S55 using the keypad displayed by the software component GC.

Steps S43 to S61 can be also performed each time the user terminal is connected to a server (e.g. the service provider server SSRV) by means of a web browser and the server needs a second factor authentication to authenticate the user.

Figure 8A represents an example of an image frame FRM displayed by the user terminal UT when it executes the software component GC. The image frame FRM comprises a banner frame BNF displaying the message MSG and the single-use code CC superimposed on the message MSG. The image frame FRM further comprises a keypad image frame KYPF showing for example a twelve-key keypad, each key of the keypad being displayed with a label KYL indicating the function of the key to the user. The keypad comprises an erase key "C" and a validation key "V", and ten keys corresponding to a digit, and having a layout specific to the software component GC which generates the image frame FRM. The image frame FRM may further comprises a display zone FBD where a dot is displayed each time the user touches a new one of the keys KY. In the example of Figure 8A, the display zone FBD shows that three keys were already typed by the user.

In the example of Figure 8A, the keypad comprises four lines of three keys, the first line of the keypad comprising (from left to right) the digits "9", "3" and "6", the second line comprising the digits "2", "0" and "1", the third line comprising the digits "4", "7", and "8" and the fourth line, the validation key "V", the digit "5" and the erase key "C". The label KYL of each digit key is displayed by several segments SG (e.g. seven segments), visible or not, according to the key label KYL to be displayed. According to an embodiment, to prevent the keypad layout from being acquired using a screenshot function of the terminal UT, only a part of the visible segments in each key KY is displayed in each image frame generated by the software component GC. To this purpose, each visible segment to be displayed is present in an image frame FRM generated by the software component GC with a probability lower than 100%, for example equal to 50%. Thanks to its persistence property, the human visual system combines the image frames successively displayed by the terminal UT. Thus the displayed key labels KYL become intelligible to the user. Figure 8B represents the displayed image IMG as it is perceptible by the human visual system when the image frames FRM generated by the software component GC are displayed at a sufficiently high frequency (greater than 30 Hz) for example at 60 Hz, such that a new frame generated by the software component is displayed every 16.6 ms. As shown in Figure 8B, the key labels KYL appear in grey to a user when visible segments to be displayed of the key labels are inserted in the frames FRM with a probability lower than 100%.

Figure 9 at the top shows one example of two superimposed layers of the banner frame BNF produced by the software component GC and displayed by the terminal UT. The central part of Figure 9 shows the banner frame as it is generated and displayed. The bottom part of Figure 9 shows the banner BN as it can be perceived by the user. The first layer of the banner frame BNF (at the top left of Figure 9) comprises a message MSG to be displayed, for example the message "Order: transfer xx € to yyyy". The second layer (at the top right of Figure 9) comprises a number of several digits, for example four digits, corresponding to the validation code CC to be entered by the user in the terminal UT. Here again, each digit of the validation code CC is displayed using several segments SG (e.g. seven segments) which are displayed or not as a function of the digit to be displayed. To prevent the validation code CC from being acquired using a screenshot function of the terminal UT, only a part of the visible segments SG is displayed in each image frame FRM generated by the software component GC, such that each visible segment SG to be displayed is present in an image frame FRM generated by the software component GC with a probability lower than 100%, for example equal to 50% (1/2).

The pixels of the first and second layers may be combined together by a XOR operation. Thus, in the generated banner frame BNF as shown in the central part of Figure 9, the pixels belonging both to the message MSG and to a segment SG of the validation code CC, are displayed in the background color, when the pixels belonging only to the message MSG or the segments SG are displayed in a color different from the background color.

The bottom part of Figure 9 represents the displayed banner BN as it is perceptible by the human visual system, when the image frames FRM generated by the software component GC are displayed at a sufficiently high frequency (greater than 30 Hz) for example at 60 Hz, such that a new frame FRM is displayed every 16.6 ms. The four digits labels DL of the validation code CC appear in grey to the user, when visible segments to be displayed are inserted in the banner frames BNF with a probability lower than 100%. In the example of Figures 8A, 8B and 9, the validation code CC is 4279.

According to an embodiment, visible and invisible segments of each digit KYL, DL to be displayed appear in the frames FRM with respective probabilities such that the displayed digits are intelligible for the human visual system, thanks to the persistence of the latter. For example, the generated software components GC are configured to display the invisible segments with a probability of 0 to 15%, and the visible segments with a probability of 50 to 100%. The visible segments forming a key label KYL or a digit of the validation code CC can be displayed with respective probabilities comprised between 50 and 100%, and the invisible segments in a key label or a digit of the validation code CC can be displayed with respective probabilities comprised between 0 and 15%. The display probabilities of the segments forming the digits of the key labels and the validation code CC can be adjusted as a function of the frame display frequency, such that the labels of the displayed digits remain intelligible for the human visual system. Segments or pixels are invisible or visible in the image frame FRM when they are displayed respectively with a background color of the image frame, or with a color different from the background color. The background color is defined by the color of the pixels around the considered segment SG, and may vary as a function of the position of the segment within the image frame FRM.

The displayed keypad KYPF may not need to have a validation key "V", the validation of the typed codes being performed when the user inputs the last digit of the validation code CC to be typed. For example, if the validation code comprises four digits, the execution of the software component GC can be ended when the user inputs four digits. The cancel key "C" can be managed either to delete the last typed digit or all the previously typed digits. The effects of the cancel key "C" may be shown to the user by erasing one or all dots in the display zone FBD.

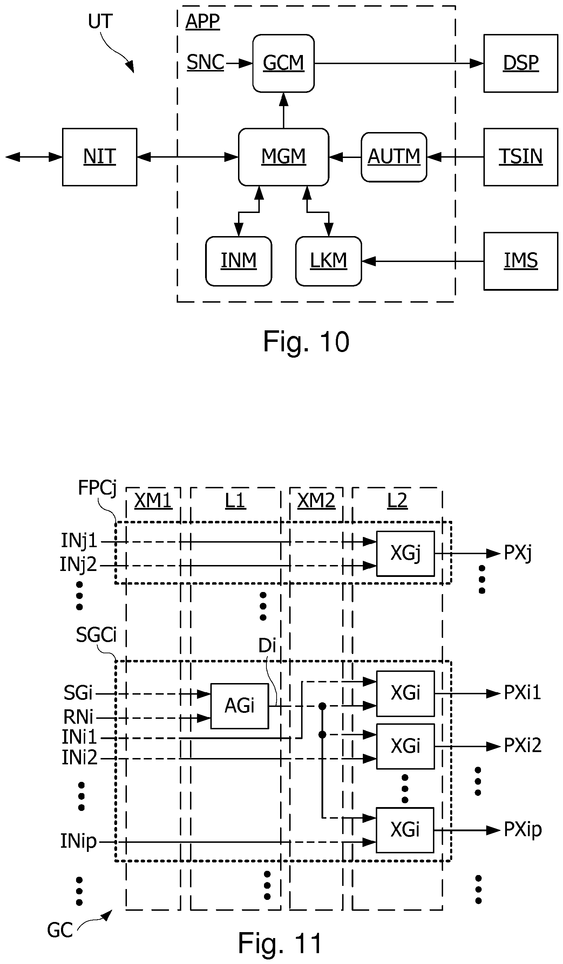

Figure 10 represents a functional architecture of the application APP, according to an embodiment. The application APP comprises a management module MGM, an initialization module INM, an authentication module AUTM, a link module LKM, a software component execution module GCM. The management module MGM controls the other modules INIM, RGM, LKM and GCM, and the communications between the application APP and the server ASRV through the communication circuits NIT. The initialization module INM performs step S9. The link module LKM performs steps S11 and S12. To this purpose, the link module can be connected to an image sensor IMS of terminal UT to acquire an optical code corresponding to the link token LTK to be received by the terminal UT, and displayed by the terminal OT. The authentication module AUTM performs steps S25 to S29 to process the authentication request received at step S23, to trigger the execution of the software component GC, and to receive and transmit the positions POSi typed by the user. The module AUTM is connected to the keypad or a touch-sensitive surface TSIN of the terminal UT. The module GCM performs the step S27 to generate and display the image frames FRM at a suitable refresh rate, the module GCM selecting at each frame, input values to be applied to the software component GC and executing the latter. The module GCM produces the image frames FRM which are displayed on the display screen DSP of the terminal UT.

Figure 11 represents an example of a software component GC according to an embodiment. The software component GC is a software-implemented Boolean circuit encrypted as a garbled circuit. The software component GC comprises two circuit layers L1, L2, and two interconnection matrices XM1, XM2. A first interconnection matrix XM1 receives input data INi, INj, SGi, RNi of the software component GC. The first layer L1 comprises logic gates AGi, each gate receiving two input values SGi, RNi from the matrix XM1 and providing one output value Di to the second interconnection matrix XM2. The second layer L2 comprises logic gates XGi, XGj, each gate receiving two input values from the matrix XM2, and providing one output value PXi, PXj representing a pixel value. Each id the logic gates AGi of the first layer L1 receives input values SGi, RNi of the software component GC, selected by the matrix XM1. Each of the logic gates XGi of the other layer L2 receives one input value INi of the software component and one output value provided by one logic gate AGi belonging to a previous layer (LI), these input values being selected by the matrix XM2. Each of the logic gates XGj of the layer L2 receives two input values INj1, INj2 of the software component, these input values being selected by the matrix XM1 and/or XM2. This structure of the software component enables parallel processing, since all logic gates in a same circuit layer L1, L2 can be processed at the same time.

According to an embodiment, to generate image frames FRM as shown in Figure 8A, the software component GC comprises one circuit SGCi for each of the segments SG that can be visible or invisible in the image frames FRM, and one circuit FPCj for each pixel PXj distinct from a segment pixel PXi, for example around the segments SG or in the banner frame BNF. Thus, when the image frames FRM to be displayed comprise 70 segments (10 key label digit x 7 segments per digit) for the keypad KYP, plus 28 segments (4 digits x 7 segment per digit) for the validation code CC, the software component comprises 98 circuits SGCi. Each of the circuits SGCi comprises one logic gate AGi in the circuit layer L1, and as much logic gates XGi in the circuit layer L2, as the number of pixels PXil, PXi2, ... PXip forming the segment SG as displayed in the image frames FRM.

The gate AGi performs for example a logical operation such as AND, OR, NAND, NOR, to display each visible segment with a probability of 50% (1/2), and each invisible segment with a probability of 0% to be visible. Each of the gates XGi performs a logical XOR operation with an input INi of the software component. The gate AGi receives one segment input value SGi and a corresponding random input value RNi. The output Di of the gate AGi is connected to an input of all gates XGi of the circuit SGCi. Each gate XGi also receives one of the input values INi1-INip and provides one pixel value PXi1-PXip to the output of the circuit GC.

Each of the circuits FPCj comprises one logic gate XGj performing a logical XOR operation per pixel PXj controlled by the software component GC and distinct from a segment pixel in the image frames FRM. Each of the gates XGj receives two input values INj1, INj2 of the software component GC and provides one pixel value PXj. Each of the gates XGj can be located either in layer L1 or in layer L2. The number of input values INi, INj can be limited to a value around the square root of the number of pixels PXi, PXj controlled by the software component GC.

The circuits SGCi are configured to display the visible segments of the digits of the key labels KYL and validation code SG with a probability of 50% and the invisible segments of these digits with a probability of 0%. The structure of the software component GC can be adapted to apply other display probabilities to the visible and invisible segments of the digits to be displayed. Of course, the digits can also be controlled and/or arranged (e.g. with more segments) to display other signs than numbers such as alphabetic characters or more generally symbols including ASCII characters.

In the example of the software component of Figure 11, one input INi or INj can be connected to several logic gates XGi, XGj, such that there are fewer inputs INi, INj than the number of logic gates XGi plus twice the number of logic gates XGj.

The interconnection matrix XM2 defines which pixel generated by the software component belongs to a segment SG. According to one embodiment, the position, orientation and shape of each segment SG are varied by one or several pixels, depending on the display resolution of the user terminal, from one software component to another. This provision makes it more difficult to perform a machine optical recognition of the displayed symbols.

It may be observed that the term "segment" as used herein designates a set of pixels that are controlled by a same one of the segment input values SGi. The set of pixels forming a segment is not necessarily formed of adjacent pixels, but can comprise groups of adjacent pixels as the segments forming a key label KYL. In addition, the pixels forming a segment are all visible or all invisible in one displayed image frame FRM.

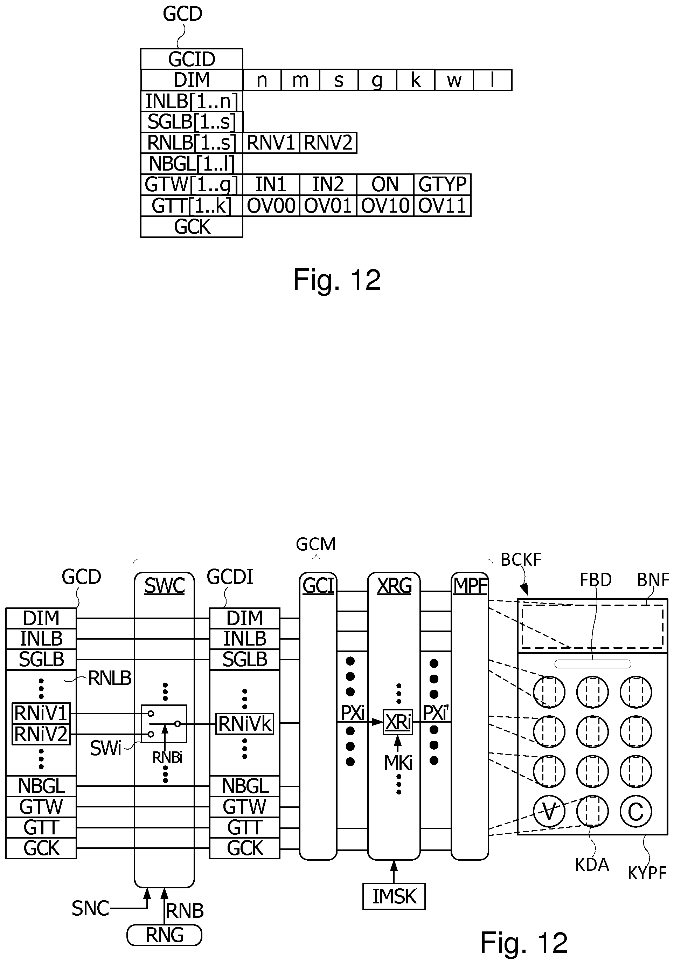

Figure 12 represents the structure and content data GCD defining the software component (which is transmitted at step S23), when it is designed as a garbled circuit, according to an embodiment. The data GCD comprises:

a unique software component identifier GCID,

a number set DIM comprising a number n of input values INi, INj, a number of output values m, a number s of segment input values SGi or random input values RNi, a number g of gates AGi, XGi, XGj, a number k of gates AGi, a number w of wires in the circuit, and a number 1 of circuit layers L1, L2 in the circuit GC,

an input data table INLB comprising all values of the inputs INi, INj of the circuit GC, for example numbered from 1 to n, as specified for the execution of the software component,

a segment table SGLB comprising all values of the segment inputs SGi of the software component GC, numbered from 1 to s, as specified for the execution of the software component,

a random data table RNLB comprising the random values RNi, numbered from 1 to s,

a gate wire table GTW defining two input wires numbers INI, IN2, an output wire number ON and a type identifier GTYP of each logic gate AG, XG of the software component GC, the gates of the circuit being numbered from 1 to g, and

a gate truth table comprising four values OV00, OV01, OV10, OV11 for each of the logic gates AG of the software component GC.

In the example of Figure 11, the type GTYP specifies that the corresponding logic gate performs either an XOR operation or another logical operation such as AND, OR, NOR, NAND.

According to an embodiment, the input values INi, SGi, RNi, INj and the output values Di, PXi, PXj of the logic gates AGi, XGi, XGj, each representing a binary logical state 0 or 1, are defined by numbers of several bits, for example 64 or 128 bits. In this way, each input and output within the garble circuit GC has only two valid values, and all the other possible values, when considering the size in bits of these values, are invalid. When the software component GC is generated, the two valid values of each input SGi, RNi, INi, INj of the software component are randomly chosen, provided that the least significant bit of the two valid values are different, these least significant bits being used, when computing the output value of one of the logic gates, to select one value in the truth table of the logic gate.

The truth table GTT[i] of each logic gate AGi, comprises four values OV00, OV01, OV10, OV11, each corresponding to a combination (0, 0), (0, 1), (1, 0), (1, 1) of binary input values corresponding to the input values of the logic gate. The topology of the software component may be defined in the table GTW, by numbering each wire of the software component, i.e. each input wire of the software component from 1 to (n+2s) and each output of the logic gates from (n+2s+1) to (n+2s+g), and by associating to each logic gate AGi, XGi, XGj one record of the table GTW comprising two wire numbers INI, IN2 to the two inputs of the gate and one wire number ON to the output of the gate. The wire numbers of the outputs of the software component GC are numbered from (n+2s+g-m+1) to (n+2s+g).

According to an embodiment, the table RNLB contains both valid values RNV1, RNV2 of each of the random values RNi, corresponding to the logical states 0 and 1. Each value RNV1, RNV2 can be equal with a same probability to either one or the other of the two valid values of the random value RNi corresponding respectively to the states 0 and 1.

The XOR gates XGi, XGj can be executed either by using a truth table which is encoded in the table GTT or by applying XOR operations to each pairs of bits of same rank in the input values of the gate. In the latter case, the field GTYP of the table GTW defines whether the gate is a XOR gate or another gate, and the table GTT comprises one record for each gate AGi only.

According to an embodiment, each value in the tables INLB, SGLB, RNLB, GTT is encoded by a 128-bit word, and each record of the table GTW is encoded on a 64-bit word, the wire numbers IN1, IN2, ON being encoded on 21-bit words. The table GTW can be transmitted from the server ASRV to the terminal UT in a compressed form, for example using the gzip compression scheme.

According to an embodiment, the order of the logic gates in the gate tables GTW, and GTT can be defined randomly, provided that the table records GTW[i] and GTT[i] at the index i refer to the same gate.

Figure 13 represents the module GCM, configured to execute a software component and to generate the image frames FRM, according to an embodiment. The module GCM executes the software component each time a new image frame is to be generated, i.e. at a frame refresh rate equal to or greater than 30 Hz. To this purpose the module GCM can be activated by a synchronization signal SNC having for example a rising edge each time a new image frame must be generated. The module GCM comprises a switching module SWC, a software component interpreter GCI, an XOR masking circuit XRG and a pixel mapping module MPF. The switching module SWC receives the synchronization signal SNC and the structure and content data GCD defining the software component GC to be executed, and loads the data to be processed by the next execution of the software component GC in an input data structure GCDI. Thus, the switching module SWC transmits the data DIM, INLB, SGLB, NBGL, GTW, GTT and GCK without modification to the structure GCDI.

According to an embodiment, the switching module SWC performs switching operations SWi to select one or the other of the two valid values RNiV1, RNiV2 of each input random value RNi. Each switching function SWi is controlled by a respective bit RNBi of a random number RNB having s bits, generated by a random number generation function RNG, s being the number of the random values RNi to be input to the software component GC or the total number of segments SGi of all the digits to be displayed. Each switching operation SWi provides for each of the random values RNi a randomly selected value RNiVk which is stored in the structure GCDI. As a result of the selection of one of the two valid values RNiV1, RNiV2 of the random values RNi (the visible segments SG to be displayed corresponding to an input data SGi set to the state one), the output of the corresponding AND gate AGi is set to state either 0 or 1, depending on the logical state of the selected random value RNiVk. Thus the visible segments SGi appear in each frame FRM with a probability equal to the probability of the random input value RNi to be set to state 1. If the number RNB is a true random number, this probability is equal to 50%.

The module GCI is a dedicated interpreting module configured to successively execute each of the logic gates of the first circuit layer L1, as defined by the data in the input data structure GCDI, and then each of the logic gates of second circuit layer L2. To this purpose, the interpreting module GCI can use a wire table receiving the value of each wire of the software component GC, written in the table at an index corresponding to the wire number of the wire value. The wire table is first loaded with the input values INi, INj, SGi, RNiVk of the software component, written in the table at indexes (between 1 and n+2s) corresponding to wire numbers assigned to the input values. Then the computed output value of each executed logic gate is written in the wire table at an index corresponding to the wire number of the output value. At the end of the software component execution, the wire table comprises the values of the outputs of the software component at indexes from (n+2s+g-m+1) to (n+2s+g).

The output value of each logic gate can be computed by applying a non-reversible function applied to both input values of the gate and to one value selected in the truth table of the gate, as a function of the least significant bit of each of the two input values:

$$OV = PF1(IN1, IN2, G) \tag{1}$$

where IN1 and IN2 represent the input values of the gate, G = GTT[IN1{0} // IN2{0}], IN1{0} and IN2{0} represent the least significant bit of the input values IN1, IN2, "//" represents the bit concatenation operator, GTT represents the four-element truth table of the gate, and PF1 represents the non-reversible function.

According to an embodiment, the function PF1 can use an encryption function such as AES (Advanced Encryption Standard) using an encryption key assigned to the software component. In this case, the encryption key GCK can be stored in the structure and content data GCD of the software component GC. For example, the output value OV of a logic gate can be computed as follows:

$$OV = AES(GCK, K) \oplus K \oplus G \tag{2}$$

with K = CF(IN1,IN2)⊕T, "⊕" represents the Exclusive OR (XOR) operator, T represents a number assigned to logic gate, for example the number of the logic gate, and can also depend on the values of the inputs IN1, IN2, CF represents a combination function, and AES(GCK, K) represents an encrypted value of K by the AES encryption algorithm using the encryption key GCK. The combination function can be an XOR operation or an operation in the form:

$$CF(IN1,IN2) = SH(IN1,a) \oplus SH(IN2,b), \tag{3}$$

SH(X,a) representing a left shift operation of X by a number a of bits.

The least significant bit of each output data of the software component GC provided by the module GCI is considered as a pixel value PXi, PXj. The module XRG combines each pixel value PXi (least significant bit of each output value provided by the software component) with a respective mask bit value MKi belonging to an image mask IMSK provided in the structure and content data GCD. The combination operation used can be an XOR operation XRi. The respective least significant bits of the output values PXi, PXj of the software component represents white noise since the output values of the software component including the least significant bit thereof are randomly chosen. Thus the image parts generated by the software component are in an encrypted form, and are decrypted using the image mask IMSK.

The image mask IMSK comprises the message MSG, such that when combined with the pixels PXj provided by the software component GC, the message MSG becomes intelligible and combined with segments SG of the validation code CC. The image mask IMSK can also be configured to make visible the pixels PXi of a digit segment SG corresponding to a segment input value SGi fixed to the binary state 0 (segment configured to be invisible). In this way, the segment is always visible (with a probability of 100%) in the generated image frames FRM. Another way to configure a segment always visible or invisible is to attribute a same value to the two random values RNiV1, RNiV2 corresponding to the related segment input value SGi in the transmitted structure and content data GCD.

According to one embodiment, the final mask IMSK is transmitted to the terminal UT at step S23 using another communication channel, for higher security.

The interconnection matrices XM1, XM2 define where the pixels PXj corresponding to the input values INj and the pixels PXi corresponding to the segment input values SGi are displayed in the image frames FRM. The input values INi, INj define in relation with the image mask IMSK if the corresponding pixel PXi, PXj in output of the software component GC is visible or invisible, the visibility of the pixels PXi depending also on the corresponding value of the random input RNi. The respective binary states of the input values INi, INj can be randomly selected at the time the software component is generated, the image mask IMSK being then generated as a function of the selected binary states of the input values INi, INj, the interconnection matrices XM1, XM2 and the image frame FRM to be displayed which defines the visible and invisible pixels in the image frame.

The mapping module MPF inserts groups of pixels values PXi' provided by the module XRG, at suitable positions into a background image frame BCKF to generate one of the image frames FRM to be displayed. In particular, the module XRG provides a group of pixels PXi' which forms the banner frame BNF as shown in Figure 9, and groups of pixels PXi' which form each of the key labels KYL of one keypad frame KYPF to be displayed in a frame FRM. The mapping module MPF inserts these groups of pixels in respective predefined locations in the background image frame BCKF to generate one of the image frames FRM as shown in Figure 8A. In one embodiment, the module XRG outputs a directly displayable image frame. In this case, the mapping module is not mandatory.

The transmission in the structure and content data GCD of the software component of the two valid values of the random inputs RNi, enables introduction of randomness in the execution and output data of the software component at a very low cost. In contrast, a software component producing random output data would require to introduce a random generator in the software component, which cannot be obviously realized without adding complexity to the garbled circuit, and thus without increasing the size of the structure and content data GCD defining the software component. In addition, the transmission of the two valid values RNiV1, RNiV2 of the random inputs RNi does not reduce the security of the introduction of the validation code CC, since the correspondence between each random input value RNiV1, RNiV2 and a binary value 0 or 1 thereof cannot be established easily.

According to one embodiment, each time the terminal UT has to perform a new authentication, a new software component GC displaying a keypad KYP with a different key layout and displaying a different validation code CC is executed at step S27.

According to an embodiment, in order to avoid the transmission of one software component GC (at step S23), each time the user terminal is required to perform a new authentication, several alternative software components (defined by the structure and content data GCD) can be downloaded in the terminal UT in one time, and the terminal UT selects a non-already executed software component each time it has to perform a new authentication. As an example, several software components are downloaded with the application APP when the latter is downloaded and installed in a user terminal UT. Then, when one or several software components are used, a new set of software components can be downloaded from the server ASRV to the terminal UT, for example when the terminal has an efficient network connection.

According to an embodiment, several alternative software components are stored in the terminal UT in an encrypted form, and each time the terminal UT must execute a new software component, the server ASRV sends a corresponding decryption key to the user terminal.

According to an embodiment, only a part of each of the software components is downloaded into the terminal UT. The downloaded part of each software component can include the data GCID, DIM, NBGL, GTW with or without the table RNLB. Each time the terminal UT has to perform a new authentication, the server ASRV only transmits to the terminal the data INLB, SGLB, GCK and IMSK, at step S23. Then, the terminal UT transmits the identifier GCID of the software component used for authentication to the server ASRV, for example at step S25 or S29. When the server ASRV receives a software component identifier GCID from a user terminal UT, it checks in the database UDB that the received identifier corresponds with a next unexecuted or valid software component previously transmitted to the terminal UT. If the received identifier does not correspond with a next unexecuted or valid software component previously transmitted to the terminal UT, the server ASRV invalidates the user authentication and the corresponding transaction. The server ASRV may also invalidate a previous transaction performed with the same software component (corresponding to the same identifier GCID).

According to an embodiment, the server ASRV can assign a validity indicator (for example in the table GCP of Figure 5) to each software component it generates for a user terminal. The server ARSV sets the validity indicator to valid when it transmits the corresponding software component to a user terminal at step S23, and to invalid when it receives the corresponding message ARP at step S29. In addition, the server ARSV can assign a validity period to each generated software component, a software component being set to invalid when its validity period has elapsed. The server ASRV may be configured to rejects a message ARP transmitted at step S29 when it corresponds to a software component set to invalid.

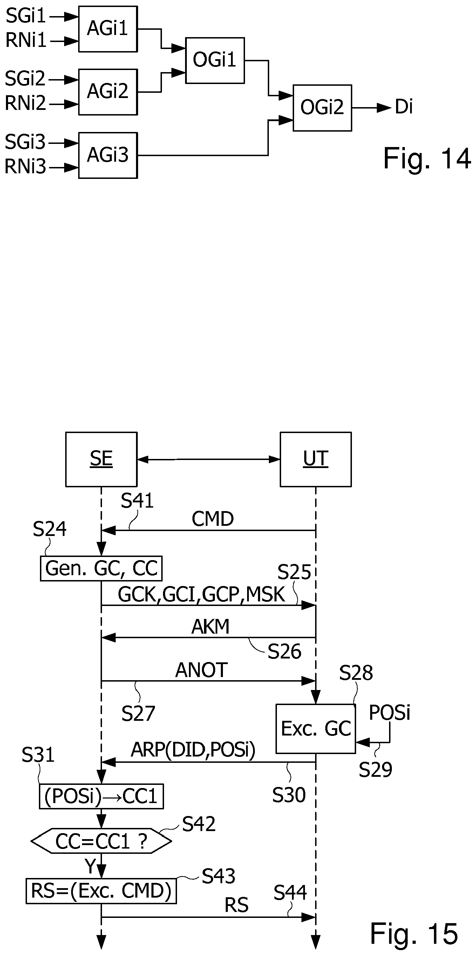

Figure 14 represents a part of the software component GC according to another embodiment. The circuit part disclosed in Figure 14 is intended to replace one logic gate AGi in the circuit of Figure 11. In the example of Figure 14, the circuit part comprises three AND gates AGi1, AGi2 and AGi3 and two OR gates OGi1, OGi2. Instead of having one segment input SGi and one random input RNi for each segment of the image frame FRM to be displayed with a probability lower than 100%, this circuit part comprises for one segment, three segment inputs SGi1, SGi2, SGi3 and three corresponding random inputs RNi1, RNi2, RNi3. Each of the gates AGi1, AGi2, AGi3 combines one respective segment input SGi1, SGi2, SGi3 with one respective random input RNi1, RNi2, RNi3. The outputs of the gates AGi1 and AGi2 are connected to the inputs of the gate OGi1, and the outputs of the gates AGi3 and OGi1 are connected to the inputs of the gate OGi2. The output Di of the gate OGi2 is connected to as much gates XGi as the number of pixels forming the segment controlled by the inputs SGi1, SGi2, SGi3. In this way, when all the segment inputs SGi1, SGi2, SGi3 are set to the binary state 0, the output Di of the gate OGi2 is set to the binary state 1 with a probability of 0%. When only one of the segment inputs SGi1, SGi2, SGi3 is set to the binary state 1, the output Di of the gate OGi2 is set to the binary state 1 with a probability of 50% (1/2). When only two of the segment inputs SGi1, SGi2, SGi3 are set to the binary state 1, the output Di of the gate OGi2 is set to the binary state 1 with a probability of 75% (3/4), and when all the three segment inputs SGi1, SGi2, SGi3 are set to the binary state 1, the output Di of the gate OGi2 is set to the binary state 1 with a probability of 87.5% (7/8). Depending on the corresponding input values INi1-INip and corresponding mask bit values MKi1-MKip of the mask IMSK, and the segment input values SGi1, SGi2, SGi3, it is possible to display a segment SGi with a probability fixed either to 0% (0), 12.5% (1/8), 25% (1/4), 50% (1/2), 75% (3/4), 82.5% (7/8) and 100% (1). According to an embodiment, the visible segments SG are displayed in the image frames FRM with a probability selected in a set of visible probability values comprising at least 12.5%, 25%, 50%, 75%, 82.5% or 100%.

These probabilities or others can be obtained using other combinations of logic gates combining the three segment input values SGi1, SGi2, SGi3 and the three random input values RNi1, RNi2, RNi3.

Obviously, other probability values can be reached by the software component, by increasing the number of inputs for one segment, and thus by increasing the number of AND gates in the first circuit layer L1 and the number of combining OR gates in following circuit layers.

According to one embodiment, the visible segments are displayed with a probability decreasing as a function of the experience level of the user. At first authentications, performed from a first installation of the application APP, the visible segments SG can be displayed in the image frames FRM with high probabilities, e.g. between 75% and 100%. As the experience level of the user grows, these probabilities can be progressively reduced and finally set to randomly-selected values for example between 12.5% and 50%.

In the embodiment using garbled circuits, the generation of a software component, performed by the server ASRV at step S22, comprises generating random values representing the binary states 0 and 1 of the input bits and of the output bits of the logic gates of the software component, some of the logic gate outputs corresponding to outputs of the garbled circuit. The generation of a software component further comprises randomly selecting the interconnection matrices XM1, XM2, i.e. randomly selecting the links between the inputs of the software component and the inputs of the logic gates of the software component, and between the outputs of some logic gates and the inputs of other logic gates (definition of the table GTW). The generation of a software component further comprises defining the truth tables GTT of the logic gates of the software component, and encrypting each value of these truth tables using an encryption key. According to an example, each four values G (=GTT[IN1{0} // IN2{0}]) of the truth table of a logic gate of the software component GC can be computed as follows:

$$G = PF2(IN1, IN2, OV) \tag{4}$$

for each possible combination of the valid values of the inputs IN1, IN2 and the output OV, when considering the binary states corresponding to the valid values of IN1, IN2 and OV, and the logic operation performed by the logic gate, PF2 representing a non-reversible function. According to the example defined by equation (2), each four values G of the truth table of a logic gate can be computed as follows:

$$G = AES(GCK, K) \oplus K \oplus OV \tag{5}$$

with K = CF(IN1,IN2)⊕T.

As a consequence, it is very difficult to determine the binary states of the input and output values and the function of the logic gates of the software component. Thus the functioning of the software component GC cannot be easily determined. In addition, the software component can process only the two valid values of each input of the circuit, among a huge number of invalid values. Therefore, it is not possible to apply any values to the inputs of the software component. For more details on garbled circuits, reference may be made to the document "Foundations of Garbled Circuits", Mihir Bellare, Viet Tung Hoang, Phillip Rogaway, dated October 1, 2012.

A hacker or a malware program executed by the terminal UT has a very short time to get the displayed validation code CC to be typed and the keypad key layout, by analyzing the displayed image frames FRM or by executing or analyzing the software component GC. Therefore it appears to be very difficult for a hacker to be authenticated at steps S21 to S33 since the typed positions POSi must correspond to the keypad KYP and validation code CC displayed by the execution of the software component GC transmitted to the terminal UT at step S24.

When the server ASRV generates the software component GC, it can be decided to use another bit rank in the values of the wires of the software component for defining the corresponding binary state of these values. Thus, the bits at the selected bit rank in the input values a logic gate AGi are used to select a data in the truth table GTT of the logic gate, and the bits at the selected bit rank in the output values PXi of the software component GC are extracted and applied to the module XRG.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

The methods disclosed herein may be implemented by software programs executable by the main processor HP (CPU) of the user terminal UT, or at least partially by the graphic processor GP of the user terminal UT.

Further, the methods disclosed herein are not limited to displaying sensitive information such as a keypad with a randomly selected layout and a validation code. Indeed, the object of such a display is to check that the user knows a secret data shared with the server ASRV and perceives information presented by the terminal in a way perceptible by a human. Alternative challenge-response schemes can be implemented in other embodiments. According to an embodiment, the displayed message MSG may conduct the user to input a combination such as the sum or the multiplication of the digits of the displayed validation code CC. In addition to this or in another embodiment, the generated frames may be formed with differences with a previously generated frame.

According to another embodiment, the flickering or blinking of segments may be controlled directly in/by the graphic processor, by setting pixel intensity, additive or subtractive pixel color, pixel refresh rate, or pixel flickering parameters of the graphic processor.

The challenge can be transmitted to the user using other means than by displaying it on a display screen. For instance, the challenge can be transmitted to the user by audio means using an audio cryptographic algorithm such as described in "Simple Audio Cryptography", by Yusuf Adriansyah, dated April 29, 2010. According to this algorithm, an original audio sequence is decomposed into a number of source audio sequences of the same length as the original audio sequence, in a way such that the original audio sequence can be reconstructed only by simultaneously playing all the source audio sequences generated by the decomposition, and such that it is very difficult to reconstruct the original audio sequence if any one of the source audio sequence is missing. Provision may be made to play two source audio sequences simultaneously, one via the terminal UT and the other via other means such as a portable device having a memory storing a source audio sequence and a headphone playing the stored source audio sequence without a microphone of the terminal hearing it. If the user hears an intelligible audio message by playing the two source audio sequences simultaneously, it means that the source audio sequence played by the portable device complements the source audio sequence.

According to another embodiment, the user records his fingerprints at step S10. At step S27, the software component GC displayed a message requesting the user to input one or two particular fingerprints, for example the thumb print and the ring finger print. This message is displayed using segments, as the digits representing the key labels KYL and validation code CC. At step S28 or S54, the user inputs the requested fingerprints, and at the verification steps S30 and S31, the server ASRV compares the input fingerprints with the one it stored after step S10. Here, the shared secret data are the fingerprints and the information to be perceived by the user is the designation of the requested fingers.

Further, the methods disclosed herein are not limited to authenticating a user in view of validating a transaction. The methods disclosed herein may be applied to securely transmit secret information to or from a user, or more generally to securely perform a sensitive operation in a non-secure environment.

Further, the methods disclosed herein are not limited to a method comprising displaying image frames and introduction of secret data (CC) using a single user terminal. The methods disclosed herein may be applied to securely authenticate a user on another connected device, the frame images being displayed on the user terminal or on a remote display such as a smartwatch, virtual reality glasses or lenses, or projected on a surface or in the form of a 3D image. Similarly, the secret data may be input in another device connected to the user terminal or using voice or gesture. Therefore, the words "user terminal" may designate a single device or a set of devices including a terminal without a display, an IoT (Internet of Things) terminal, a smart home terminal, and any input terminal that allows the user to enter data.

The user terminal UT may be controlled by voice or gesture. Voice command may be translated to command.

Each recognized command being equivalent to one of the positions POSi. The keypad may be replaced by any other representations such as the ones requiring a gesture, following a geometric figure or tracing links between dots. Further, the input terminal may be a 3D input terminal with which the user may interact by 3D gestures in the air. Therefore the positions POSi may be 3D coordinate positions in space.

In other embodiments, the display may be any display including for example an ATM, a vending machine, a TV, a public display, a projected display, a virtual display a 3D display or a hologram. In other embodiments, the terminal may be any input equipment including for example a touch screen, a game accessory, a gesture acquisition system, a voice or sound command system.

In other embodiments, the images frames FRM are generated without applying the mask IMSK, and are displayed separately from the mask IMSK using two display devices, one of the two display devices being transparent, such as a display device in the form of eye lenses, the displayed images becoming intelligible to the user when the displayed image frames are superimposed with the display mask IMSK.

Further, the methods disclosed herein, introducing randomization in the execution of the software component protected against tampering and reverse-engineering, are not limited to generate blinking pixel in an image or an image frame. More generally, these methods can be used in any application in which a random state is required in a sensitive software function, protected against reverse-engineering and tampering, the software function receiving input data and providing output data. For example, these methods can be applied to protection of data without using encryption or decryption keys which are exposed to key theft. In this example, the software component is configured to provide a part of the protected data as a function of a set of random input data, each random input data having two possible values. Each combination of the random input values applied to the software component is used to compute a respective part of the protected data. The number of combinations of the random input values defines the number of data parts that can be computed by executing the software component. As an example, the data to be protected can be images, and the data parts of such images can be pixel values of an image or color component values of the image pixels, the execution of the software component providing a pixel value or a part thereof and a position of the pixel in the image (see "Secure Image Datasets in Cloud Computing", X. Arogya Presskila, P .Sobana Sumi, in International Journal of Advanced Research in Computer Science and Software Engineering, Vol. 4, Issue 3, March 2014). The parts of the data to be protected that are each computed by one execution of the software component applied to one combination of the input values can be as small as desired. For instance, the software component can be configured to provide by one execution a point of a Gaussian curve or a value that is used to compute a histogram, the data part value corresponding to the highest value computed by the software component or to the value having the highest occurrence number in the histogram. Only a part of the protected data can be made accessible when only a part of the two alternative values of the input data of the software component is provided, only one value being provided for the other input data of the software component.

Further, the methods disclosed herein are not limited to an implementation involving an authentication server. Other implementations can involve a secure element within the user terminal, such as the secure processor SE shown in Figure 2, or a secure domain within the main processor HP of the terminal. In the methods disclosed herein, all operations performed by the server ASRV can be performed by such a secure element. Figure 15 represents authentication steps S41 to S44 performed by the user terminal UT and a secure element SE connected to the main processor HP of the terminal UT, and enabling the secure element to authenticate the user. At step S41, the terminal UT transmits a command CMD to the secure element SE, this command requiring an authentication of the user before being executed by the secure element. Then the terminal UT performs steps S26 and S28 to S30, as previously disclosed. The secure element SE performs steps S24, S25, S27 and S31, in place of the server ASRV. Then the secure element SE performs steps S42 to S44. At step S42, the secure element SE compares the validation code CC1 input by the user to corresponding value CC securely stored by secure element SE. If the validation code CC1 typed by the user match the value CC stored by the secure element SE, the latter performs step S43 in which it executes the command CMD requested at step S41. At step S44, the secure element SE transmits an execution report RS of the command CMD. In this way, the secure element SE executes the command CMD only when the user of the terminal UT authorizes it.

According to an embodiment, the secure element SE in Figure 15 can be implemented by or can be part of an external terminal connected to the user terminal UT by means of a communication link such as NFC (Near Field Communication) or Bluetooth. The external terminal can be a point-of-sale terminal.

Further, the methods disclosed herein are not limited to garbled circuits comprising gates having only two inputs and one output. Other types of gates with three or more inputs and one or more outputs or receiving data having more than two valid states may be implemented using truth tables having more than four lines. Therefore, the randomness obtained by transmitting and selecting one of the possible values RNiV1 and RNiV2 of the input RNi, may also be obtained by transmitting and randomly selecting one value among three or more valid values of an input of the garbled circuit.

Further, the methods disclosed herein are not limited to an implementation of the software component by a garbled circuit. Other implementations of the software component such as including obfuscated programs can be used to hide parts of the program loaded in the main processor of the terminal UT, and/or to prevent sensitive parts of the program from being unveiled or modified by unauthorized persons. Methods of obfuscating programs are disclosed for example in the documents "Obfuscating Circuits via Composite-Order Graded Encoding" Benny Applebaumy, Zvika Brakerskiz, IACR-TCC 12/01/2015, and "How to Obfuscate Programs Directly", Joe Zimmerman, IACR, 30/09/2014.

More generally, the conception of a garbled circuit can be perform by translating a program written in language such as C or C++ into a circuit design language such as VHDL or Verilog to obtain a logic or Boolean circuit comprising logic gates.

Further, the methods disclosed herein are not limited to the use of a software component protected against tampering and reverse-engineering, such as generated using obfuscation and/or garbled circuit methods. As an example of such an application, the methods disclosed herein may be used to perform operations that do not require high security level, such as video games or medical eye testing.

Further, the methods disclosed herein are not limited to an implementation involving a mask such the image mask IMSK to decrypt output values of the software component. Other implementations can generate and execute a software component directly outputting the pixels values to be displayed. In addition, the message MSG can be directly provided in the output pixel values. In addition the mask can be transmitted separately from the software component or the structure and content data thereof, even after the execution of the software component.

Further, the methods disclosed herein can be implemented with a user terminal UT that only comprises a hardware keypad, the displayed frames FRM being displayed just to assign other key labels to the physical keypad. Thus, instead to touch positions of the display screen to input the positions POSi, the user activates hardware keys of the keypad in correspondence with the assigned labels shown in the displayed frames FRM.

The term pixel, as used herein for a standard display screen, may be understood as coordinates, either 2D coordinates for a 2D display or 3D coordinates for a 3D or stereo display or for a projected display.

Further, the disclosure and the illustrations are to be considered as illustrative rather than restrictive, and the appended claims are intended to cover all such modifications, enhancements and other embodiments, or combinations thereof, which fall within the true spirit and scope of the description. Therefore, the scope of the following claims is to be determined by the broadest permissible interpretation of the claims and their equivalents, and shall not be restricted or limited by the foregoing description.

**Claims**

1. A method for authenticating a user from a user terminal (UT), the method comprising:

   receiving by the user terminal from a secure processor (ASRV, SE), a software component (GC) protected against tampering and reverse-engineering and configured to generate an image frame comprising random pixels (PXi) having a probability lower than 100% to be visible in the image frame;
   executing the software component by the user terminal a plurality of times to generate a plurality of image frames;
   displaying the plurality of image frames at a frame display rate, the image frames including information (KYL, CC) which is machine unintelligible as being formed of the random pixels, the frame display rate being such that the information becomes intelligible to a user;
   acquiring a response (POSi) from the user in relation with the information; and
   transmitting the response by the user terminal to the secure processor, the user being authenticated when the response corresponds to the information.

2. The method of claim 1, wherein the software component (GC) is configured to generate a plurality of frame image parts (BNF, KYPF) each comprising the random pixels (PXi), the method further comprising inserting each generated image frame part into an image frame background (BCKF) to generate the plurality of image frames (FRM).

3. The method of claim 1 or 2, wherein the software component (GC) is configured to generate encrypted frame image parts comprising the random pixels (PXi), the method further comprising: decrypting, by the user terminal, each generated encrypted image frame part, by applying to each pixel of the encrypted image frame part an XOR operation with a corresponding pixel of a decrypting mask (IMSK), each decrypted image frame part being inserted into an image frame background (BCKF) to generate one of the plurality of images frames (FRM).

4. The method of claim 3, wherein the decrypting mask (IMSK) is configured to produce a message (MSG) in the displayed image frames (FRM), when decrypting one of the generated encrypted image frame parts.

5. The method of one of claims 1 to 4, wherein the machine unintelligible information (KYL, CC) in the displayed image frames comprises segments (SG) arranged to form symbols, or numeric or alphanumeric characters, at least a part of the segments being formed with the random pixels (PXi).

6. The method of claim 5, wherein the segments are arranged to form labels of keys (KYL) of a keypad (KYP), the key labels having a random key layout, the response from the user comprising positions (POSi) of keys of the keypad (KYP) successively selected by the user.

7. The method of claim 6, wherein the response from the user comprises positions (POSi) of keys of the keypad corresponding with a validation code (CC) displayed with segments (SG) formed with the random pixels (PXi).

8. The method of one of claims 1 to 7, wherein the software component (GC) is configured to set a probability of the random pixels (PXi) to be visible in the displayed image frames (FRM), the probability being selected in a set of visible probability values.

9. The method of one of claims 1 to 8, wherein the software component (GC) is configured to provide the random pixels (PXi) with a probability set to a value equal to 50% or comprised between 12.5% and 82.5%, to be visible in the displayed image frames (FRM).

10. The method of one of claims 1 to 9, wherein the software component is encoded as a garbled circuit (GC) comprising circuit inputs (SGi, RNi, INi, INj), circuit outputs (PXi, PXj), logic gates (AGi, XGi, XGj) and wires, each logic gate having two inputs and one output, each wire having a first end connected to one of the circuit inputs or to one of the logic gate outputs and a second end connected to one of the logic gate inputs or to one of the circuit outputs, the garbled circuit being generated by randomly generating a valid data representing each binary state of each of the wires, and by computing for one logic gate of the garbled circuit, truth table values as a function of each valid data of each input of the logic gate, each valid data of the output of the logic gate and a logic operation performed by the logic gate.

11. The method of claim 10, wherein the software component (GC) comprises a pixel set generation circuit (SGCi) for a set (SG) of random pixels (PXi1-PXip) to generate, each generation circuit comprising a first logic gate (AGi) and a set of second logic gates (XGi), the first logic gate combining a first input data (SGi) to a randomly selected second input data (RNi), and providing an output data (Di) to a first input of each of the second logic gates, a second input of each of the second logic gates receiving a third input data (INi), each of the outputs of the second logic gates providing a pixel value of the set of random pixels.

12. The method of one of claims 1 to 11, wherein the software component (GC) is executed within a web browser executed by the user terminal (UT).

13. A user terminal configured to:

receive from a secure processor (ASRV, SE) a software component (GC) protected against tampering and reverse-engineering and configured to generate an image frame comprising random pixels having a probability lower than 100% to be visible in the image frame;
execute the software component a plurality of times to generate a plurality of image frames;
display the plurality of image frames at a frame display rate, the image frames including information (KYL, CC) which is machine unintelligible as being formed of the random pixels, the frame display rate being such that the information becomes intelligible to a user;
acquire a response (POSi) from the user in relation with the displayed information; and
transmit the response to the secure processor (ASRV, SE), the user being authenticated when the response corresponds to the information.

14. The terminal of claim 13, configured to execute the operations performed by a terminal in the method of one of claims 2 to 10.

15. The terminal of claim 13 or 14, wherein the secure processor is a secure element (SE) installed in the terminal and connected to a main processor (HP) of the terminal, or belongs to a remote server (ASRV) linked to the terminal through a data transmission network (NT).

16. A secure element processor configured to execute the operations performed by a secure processor in the method of one of claims 1 to 12, wherein the secure element (SE) is connected to a main processor (HP) of a terminal (UT).

17. A server configured to execute the operations performed by a secure processor in the method of one of claims 1 to 12, wherein the server (ASRV) is linked to the terminal (UT) through a data transmission network (NT).

18. A computer program product loadable into a computer memory and comprising code portions which, when carried out by a computer, configure the computer to carry out the operations performed by the terminal in a method of one of claims 1-12.

**Patentansprüche**

1. Verfahren zum Authentifizieren eines Benutzers durch ein Benutzerendgerät (UT), wobei das Verfahren Folgendes umfasst:

    Empfangen, durch das Benutzerendgerät, von einem sicheren Prozessor (ASRV, SE), einer Softwarekomponente (GC), die gegen Manipulation und Reverse Engineering geschützt und konfiguriert ist, um einen Bildrahmen mit zufälligen Pixeln (PXi) zu generieren, die eine Wahrscheinlichkeit von weniger als 100% aufweisen, im Bildrahmen sichtbar zu sein;
    mehrmaliges Ausführen der Softwarekomponente durch das Benutzerendgerät, um mehrere Bildrahmen zu erzeugen;
    Anzeigen mehrerer Bildrahmen mit einer Bildrahmen-Anzeigerate, wobei die Bildrahmen Informationen (KYL, CC) enthalten, die maschinell nicht verständlich sind, da sie aus den zufälligen Pixeln gebildet werden, wobei die Bildrahmen-Anzeigerate derart ist, dass die Informationen für einen Benutzer verständlich werden;
    Erfassen einer Antwort (POSi) von dem Benutzer in Bezug auf die Informationen; und
    Übertragen der Antwort von dem Benutzerendgerät an den sicheren Prozessor, wobei der Benutzer authentifiziert wird, wenn die Antwort den Informationen entspricht.

2. Verfahren nach Anspruch 1, wobei die Softwarekomponente (GC) konfiguriert ist, um mehrere Rahmenbildteile (BNF, KYPF) zu erzeugen, die jeweils die zufälligen Pixel (PXi) umfassen, wobei das Verfahren ferner das Einfügen jedes erzeugten Bildrahmenteils in ein Bildrahmenhintergrund (BCKF) zum Erzeugen der Vielzahl von Bildrahmen (FRM) umfasst.

3. Verfahren nach Anspruch 1 oder 2, wobei die Softwarekomponente (GC) konfiguriert ist, um verschlüsselte Rahmenbildteile zu erzeugen, die die zufälligen Pixel (PXi) umfassen, wobei das Verfahren ferner Folgendes umfasst:

    Entschlüsseln durch das Benutzerendgerät jedes erzeugten verschlüsselten Bildrahmenteils;
    Einfügen von jedem entschlüsselten Bildrahmenteil in einen Bildrahmenhintergrund (BCKF) durch Anwenden einer XOR-Operation mit einem entsprechenden Pixel einer Entschlüsselungsmaske (IMSK) auf jedes Pixel des verschlüsselten Bildrahmenteils, um einen der mehreren Bildrahmen (FRM) zu erzeugen.

4. Verfahren nach Anspruch 3, wobei die Entschlüsselungsmaske (IMSK) konfiguriert ist, um eine Nachricht (MSG) in den angezeigten Bildrahmen (FRM) zu erzeugen, wenn einer der erzeugten verschlüsselten Bildrahmenteile entschlüsselt wird.

5. Verfahren nach einem der Ansprüche 1 bis 4, wobei die maschinenunverständliche Information (KYF, CC) in den angezeigten Bildrahmen Segmente (SG) umfasst, die angeordnet sind, um Symbole oder numerische oder alphanumerische Zeichen zu bilden, wobei zumindest ein Teil der Segmente mit den zufälligen Pixeln (PXi) gebildet wird.

6. Verfahren nach Anspruch 5, wobei die Segmente angeordnet sind, um Beschriftungen von Tasten (KYL) einer Tastatur (KYP) zu bilden, wobei die Tastenbeschriftungen ein zufälliges Tastenlayout haben, wobei die Antwort des Benutzers Positionen (POSi) von Tasten der Tastatur (KYP) umfasst, die vom Benutzer nacheinander ausgewählt werden.

7. Verfahren nach Anspruch 6, wobei die Antwort des Benutzers Positionen (POSi) von Tasten der Tastatur umfasst, die einem Validierungscode (CC) entsprechen, der mit Segmenten (SG) angezeigt wird, die mit den zufälligen Pixeln (PXi) gebildet werden.

8. Verfahren nach einem der Ansprüche 1 bis 7, wobei die Softwarekomponente (GC) konfiguriert ist, um eine Wahrscheinlichkeit einzustellen, dass die zufälligen Pixel (PXi) in den angezeigten Bildrahmen (FRM) sichtbar sind, wobei die Wahrscheinlichkeit in einem Satz von sichtbaren Wahrscheinlichkeitswerte ausgewählt wird.

9. Verfahren nach einem der Ansprüche 1 bis 8, wobei die Softwarekomponente (GC) konfiguriert ist, um die zufälligen Pixel (PXi) mit einer Wahrscheinlichkeit bereitzustellen, in den angezeigten Einzelbildern (FRM) sichtbar zu sein, die auf einen Wert gleich 50 % gesetzt ist oder zwischen 12,5 % und 82,5 % liegt.

10. Verfahren nach einem der Ansprüche 1 bis 9, wobei die Softwarekomponente als eine wirre Schaltung (GC) kodiert ist, die Schaltungseingänge (SGi, RNi, INi, INj), Schaltungsausgänge (PXi, PXj), Logikgatter (AGi, XGi, XGj) und Drähte umfasst, wobei jedes Logikgatter zwei Eingänge und einen Ausgang aufweist, wobei jeder Draht ein erstes Ende, welches mit einem der Schaltungseingänge, oder mit einem der Logikgatterausgänge verbunden ist, und ein zweites Ende aufweist, das mit einem der Logikgattereingänge oder mit einem der Schaltungsausgänge verbunden ist, wobei die wirre Schaltung durch zufälliges Erzeugen gültiger Daten erzeugt wird, die jeden binären Zustand jeder der Drähte darstellen, und durch Berechnen von Wahrheitstabellenwerten für ein Logikgatter der verstümmelten Schaltung als Funktion von jeweils gültigen Daten von jedem Eingang des Logikgatters, wobei jeder gültige Datenwert des Ausgangs des Logikgatters und eine Logikoperation von dem Logikgatter ausgeführt werden.

11. Verfahren nach Anspruch 10, wobei die Softwarekomponente (GC) eine Pixelset-Erzeugungsschaltung (SGCi) für einen Satz (SG) von zufälligen Pixeln (PXi1-PXip) zum Erzeugen umfasst, wobei jede Erzeugungsschaltung ein erstes Logikgatter (AGi) und einen Satz von zweiten Logikgattern (XGi) umfasst, wobei das erste Logikgatter erste Eingangsdaten (SGi) mit zufällig ausgewählten zweiten Eingangsdaten (RNi) kombiniert und Ausgangsdaten (Di) an einen ersten Eingang von jedem der zweiten Logikgatter bereitstellt, wobei ein zweiter Eingang jedes der zweiten Logikgatter dritte Eingangsdaten (INi) empfängt, wobei jeder der Ausgänge der zweiten Logikgatter einen Pixelwert des Satzes von zufälligen Pixeln bereitstellt.

12. Verfahren nach einem der Ansprüche 1 bis 11, wobei die Softwarekomponente (GC) in einem Webbrowser ausgeführt wird, der von dem Benutzerendgerät (UT) ausgeführt wird.

13. Benutzerendgerät, das für Folgendes konfiguriert ist:

    Empfangen, von einem sicheren Prozessor (ASRV, SE) einer Softwarekomponente (GC), die gegen Manipulation und Reverse Engineering geschützt und konfiguriert ist, um einen Bildrahmen zu erzeugen, der zufällige Pixel mit einer Wahrscheinlichkeit von weniger als 100% umfasst, in dem Bildrahmen sichtbar zu sein;
    Mehrmaliges Ausführen der Softwarekomponente, um mehrere Bildrahmen zu erzeugen;
    Anzeigen der mehreren Bildrahmen mit einer Bildrahmenwiedergaberate, wobei die Bildrahmen Informationen (KYL, CC) enthalten, die maschinell nicht verständlich sind, da sie aus den zufälligen Pixeln gebildet werden, wobei die Bildrahmenwiedergaberate derart ist, dass die Informationen für einen Benutzer verständlich werden;
    Erhalten einer Antwort (POSi) von dem Benutzer in Bezug auf die angezeigten Informationen; und
    Übertragen der Antwort an den sicheren Prozessor (ASRV, SE), wobei der Benutzer authentifiziert wird, wenn die Antwort der Information entspricht.

14. Endgerät nach Anspruch 13, konfiguriert zum Ausführen der Operationen, die von einem Endgerät in dem Verfahren nach einem der Ansprüche 2 bis 10 ausgeführt werden.

15. Endgerät nach Anspruch 13 oder 14, wobei der sichere Prozessor ein sicheres Element (SE) ist, das in dem Endgerät installiert ist und mit einem Hauptprozessor (HP) des Endgeräts verbunden ist, oder zu einem Remote-Server (ASRV) gehört, der durch ein Datenübertragungsnetz (NT) mit dem Endgerät verbunden ist.

16. Prozessor für sichere Elemente, der konfiguriert ist, um die Operationen auszuführen, die von einem sicheren Prozessor in dem Verfahren nach einem der Ansprüche 1 bis 12 ausgeführt werden, wobei das sichere Element (SE) mit einem Hauptprozessor (HP) eines Endgeräts (UT) verbunden ist.

17. Server, der zur Ausführung der von einem sicheren Prozessor in dem Verfahren nach einem der Ansprüche 1 bis 12 ausgeführten Operationen konfiguriert ist, wobei der Server (ASRV) mit dem Endgerät (UT) über ein Datenübertragungsnetzwerk (NT) verbunden ist.

18. Computerprogrammprodukt, das in einen Computerspeicher geladen werden kann und Codeabschnitte umfasst, die, wenn sie von einem Computer ausgeführt werden, den Computer so konfigurieren, dass er die vom Endgerät in einem Verfahren nach einem der Ansprüche 1 bis 12 ausgeführten Operationen ausführt.

**Revendications**

1. Procédé d'authentification d'un utilisateur à partir d'un terminal (UT), le procédé comprenant des étapes de :

   recevoir par le terminal d'utilisateur, d'un processeur sécurisé (ASRV, SE), un composant logiciel (GC) protégé contre la falsification et l'ingénierie inverse et configuré pour générer une trame d'image comprenant des pixels aléatoires (PXi) ayant une probabilité inférieure à 100% d'être visible dans la trame d'image;
   exécuter le composant logiciel par le terminal d'utilisateur plusieurs fois pour générer une pluralité de trames d'image;
   afficher la pluralité de trames d'image à une fréquence d'affichage de trame, les trames d'image comprenant une information (KYL, CC) qui est inintelligible pour une machine, étant formée des pixels aléatoires, la fréquence d'affichage de trame étant telle que l'information devient intelligible pour un utilisateur;
   acquérir une réponse (POSi) de l'utilisateur en relation avec l'information; et
   transmettre la réponse du terminal d'utilisateur au processeur sécurisé, l'utilisateur étant authentifié lorsque la réponse correspond à l'information.

2. Procédé selon la revendication 1, dans lequel le composant logiciel (GC) est configuré pour générer une pluralité de parties d'images de trame (BNF, KYPF) comprenant chacune les pixels aléatoires (PXi), le procédé comprenant en outre des étapes d'insertion de chaque partie d'image générée dans un fond de trame d'image (BCKF) pour générer la pluralité de trames d'image (FRM).

3. Procédé selon la revendication 1 ou 2, dans lequel le composant logiciel (GC) est configuré pour générer des parties d'image de trame cryptées comprenant les pixels aléatoires (PXi), le procédé comprenant en outre des étapes de décryptage, par le terminal d'utilisateur, de chaque partie de trame d'image cryptée générée, en appliquant àchaque pixel de la partie de trame d'image cryptée une opération XOR avec un pixel correspondant d'un masque de décryptage (IMSK), chaque partie de trame d'image décryptée étant insérée dans un fond de trame d'image (BCKF) pour générer une trame de la pluralité de trames d'image (FRM).

4. Procédé selon la revendication 3, dans lequel le masque de décryptage (IMSK) est configuré pour produire un message (MSG) dans les trames d'image affichées (FRM) lors du décryptage de l'une des trames d'image cryptées générées.

5. Procédé selon l'une des revendications 1 à 4, dans lequel les informations non intelligibles (KYL, CC) pour une machine dans les trames d'image affichées comprennent des segments (SG) agencés pour former des symboles, ou des caractères numériques ou alphanumériques, au moins une partie des segments étant formée avec les pixels aléatoires (PXi).

6. Procédé selon la revendication 5, dans lequel les segments sont agencés pour former des étiquettes de touches (KYL) d'un clavier (KYP), les étiquettes de touche ayant une disposition de touche aléatoire, la réponse de l'utilisateur (POSi) comprenant des positions de touches du clavier (KYP) sélectionnées successivement par l'utilisateur.

7. Procédé selon la revendication 6, dans lequel la réponse de l'utilisateur comprend des positions (POSi) de touches du clavier correspondant à un code de validation (CC) affiché avec des segments (SG) formés avec les pixels aléatoires (PXi).

8. Procédé selon l'une des revendications 1 à 7, dans lequel le composant logiciel (GC) est configuré pour fixer une probabilité que les pixels aléatoires (PXi) soient visibles dans les trames d'image (FRM) affichées, la probabilité étant sélectionnée dans un ensemble de valeurs de probabilité de visibilité.

9. Procédé selon l'une des revendications 1 à 8, dans lequel le composant logiciel (GC) est configuré pour fournir les pixels aléatoires (PXi) avec une probabilité fixée à une valeur de 50% ou comprise entre 12,5% et 82,5%, d'être visible dans les trames d'image affichées (FRM).

10. Procédé selon l'une des revendications 1 à 9, dans lequel le composant logiciel est codé sous forme de circuit brouillé (GC) comprenant des entrées de circuit (SGi, RNi, INi, INj), des sorties de circuit (PXi, PXj), des portes logiques (AGi, XGi, XGj) et des fils, chaque porte logique ayant deux entrées et une sortie, chaque fil ayant une première extrémité connectée à l'une des entrées du circuit ou à l'une des sorties de porte logique et une seconde extrémité connectée à l'une des entrées de porte logique ou à l'une des sorties de circuit, le circuit brouillé étant généré en générant aléatoirement une donnée valide représentant chaque état binaire de chacun des fils, et en calculant pour une porte logique du circuit brouillé, les valeurs d'une table de vérité en fonction de chaque donnée valide de chaque entrée de la porte logique, chaque donnée valide de la sortie de la porte logique et d'une opération logique réalisée par la porte logique.

11. Procédé selon la revendication 10, dans lequel le composant logiciel (GC) comprend un circuit de génération d'ensemble de pixels (SGCi) pour un ensemble (SG) de pixels aléatoires (PX1-PXip) à générer, chaque circuit de génération comprenant une première porte logique (AGi) et un ensemble de secondes portes logiques (XGi), la première porte logique combinant une première donnée d'entrée (SGi) à une seconde donnée d'entrée sélectionnée de manière aléatoire (RNi), et fournissant une donnée de sortie (Di) à une première entrée de chacune des secondes portes logiques, une seconde entrée de chacune des secondes portes logiques recevant une troisième donnée d'entrée (INi), chacune des sorties des secondes portes logiques fournissant une valeur de pixel de l'ensemble de pixels aléatoires.

12. Procédé selon l'une des revendications 1 à 11, dans lequel le composant logiciel (GC) est exécuté dans un navigateur Web exécuté par le terminal d'utilisateur (UT).

13. Terminal d'utilisateur configuré pour:

   recevoir d'un processeur sécurisé (ASRV, SE) un composant logiciel (GC) protégé contre la falsification et l'ingénierie inverse, et configuré pour générer une trame d'image comprenant des pixels aléatoires ayant une probabilité inférieure à 100% d'être visibles dans la trame d'image;
   exécuter le composant logiciel plusieurs fois pour générer une pluralité de trames d'image;
   afficher la pluralité de trames d'image à une fréquence d'affichage de trame, les trames d'image incluant une information (KYL, CC) qui est inintelligible pour une machine, étant formée par les pixels aléatoires, la fréquence d'affichage de trame étant telle que l'information devient intelligible pour un utilisateur;
   acquérir une réponse (POSi) de l'utilisateur en relation avec l'information affichée; et
   transmettre la réponse au processeur sécurisé (ASRV, SE), l'utilisateur étant authentifié lorsque la réponse correspond à l'information.

14. Terminal selon la revendication 13, configuré pour exécuter les opérations effectuées par un terminal dans le procédé selon l'une des revendications 2 à 10.

15. Terminal selon la revendication 13 ou 14, dans lequel le processeur sécurisé est un élément sécurisé (SE) installé dans le terminal et connecté à un processeur principal (HP) du terminal, ou appartient à un serveur distant (ASRV) relié au serveur terminal via un réseau de transmission de données (NT).

16. Processeur d'élément sécurisé configuré pour exécuter les opérations effectuées par un processeur sécurisé dans le procédé selon l'une des revendications 1 à 12, dans lequel l'élément sécurisé (SE) est connecté à un processeur principal (HP) d'un terminal (UT).

17. Serveur configuré pour exécuter les opérations effectuées par un processeur sécurisé dans le procédé selon l'une des revendications 1 à 12, dans lequel le serveur (ASRV) est relié au terminal (UT) via un réseau de transmission de données (NT).

18. Produit programme d'ordinateur apte à être chargé dans une mémoire d'ordinateur et comprenant des portions de code qui, lorsqu'elles sont exécutées par un ordinateur, configurent l'ordinateur pour effectuer les opérations effectuées par le terminal dans le procédé selon l'une des revendications 1 à 12.

Fig. 1

Fig. 2

Fig. 3

Fig. 4

Fig. 5

Fig. 6

Fig. 7

Fig. 8A

Fig. 8B

Fig. 9

UT

APP

SNC → GCM ────────────→ DSP

NIT ←──────→ MGM ←── AUTM ←── TSIN

INM   LKM ←── IMS

## Fig. 10

FPCj   XM1   L1   XM2   L2

INj1
INj2   → XGj → PXj

SGCi

Di

SGi
RNi   → AGi
INi1
INi2   → XGi → PXi1

XGi → PXi2

INip   → XGi → PXip

GC

## Fig. 11

GCD

| GCID | | | | | | | |
|------|-----|-----|-----|-----|-----|-----|-----|
| DIM | n | m | s | g | k | w | l |
| INLB[1..n] | | | | | | | |
| SGLB[1..s] | | | | | | | |
| RNLB[1..s] | RNV1 | RNV2 | | | | | |
| NBGL[1..l] | | | | | | | |
| GTW[1..g] | IN1 | IN2 | ON | GTYP | | | |
| GTT[1..k] | OV00 | OV01 | OV10 | OV11 | | | |
| GCK | | | | | | | |

Fig. 12

Fig. 12

SGi1 → | AGi1 |
RNi1 →

SGi2 → | AGi2 |
RNi2 →

| OGi1 |

| OGi2 | → Di

SGi3 → | AGi3 |
RNi3 →

Fig. 14

| SE | ⟷ | UT |

S41
S24 ← CMD

| Gen. GC, CC |
S25
GCK,GCI,GCP,MSK →

← AKM
S26

ANOT →
S28

S27

| Exc. GC | ← POSi

S31 ← ARP(DID,POSi)
S29

| (POSi)→CC1 |
S30

⟨ CC=CC1 ? ⟩ S42

Y

| RS=(Exc. CMD) | S43
S44
RS →

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012107698 A

### Non-patent literature cited in the description

- **MIHIR BELLARE ; VIET TUNG HOANG ; PHILLIP ROGAWAY.** *Foundations of Garbled Circuits,* 01 October 2012
- **YUSUF ADRIANSYAH.** *Simple Audio Cryptography,* 29 April 2010
- **X. AROGYA PRESSKILA ; P .SOBANA SUMI.** Secure Image Datasets in Cloud Computing. International Journal of Advanced Research in Computer Science and Software Engineering, March 2014, vol. 4
- **BENNY APPLEBAUMY ; ZVIKA BRAKERSKIZ.** Obfuscating Circuits via Composite-Order Graded Encoding. *IACR-TCC,* 12 January 2015
- **JOE ZIMMERMAN.** How to Obfuscate Programs Directly. *IACR,* 30 September 2014